# EUROPÄISCHE PATENTSCHRIFT

(11) **EP 3 600 989 B1**
(45) Veröffentlichungstag und Bekanntmachung des Hinweises auf die Patenterteilung: **04.10.2023**
(21) Anmeldenummer: 18712820.2
(22) Anmeldetag: 13.03.2018
(51) Int. Cl.: B60T 8/40

(54) **PEDALSIMULATIONSVORRICHTUNG MIT MEHREREN RÜCKSTELLELEMENTEN**
PEDAL SIMULATION DEVICE HAVING A PLURALITY OF RESTORING ELEMENTS
DISPOSITIF DE SIMULATION DE PÉDALE COMPORTANT PLUSIEURS ÉLÉMENTS DE RÉINITIALISATION

(30) Priorität: 22.03.2017 DE 102017002770
(43) Veröffentlichungstag der Anmeldung: 05.02.2020
(73) Patentinhaber: ZF Active Safety GmbH, 56070 Koblenz (DE)
(72) Erfinder: ERVITI, Carlos, 31471 Monreal (Navarra) (ES); TROBAJO, Jorge, 31192 Mutilva (ES); MAISTERRA, Ana, 31192 Mutilva (ES); ZAPATA, Omayra, 31360 Funes (ES)
(86) Internationale Anmeldenummer: PCT/EP2018/056148
(87) Internationale Veröffentlichungsnummer: WO 2018/172130

(56) Entgegenhaltungen:
- WO-A1-2013/113625
- DE-A1-102014 215 091
- DE-A1-102014 224 889
- DE-A1-102015 200 016

## Beschreibung

### Technisches Gebiet

Die vorliegende Offenbarung betrifft allgemein das technische Gebet von Pedalsimulationsvorrichtungen, insbesondere für Kraftfahrzeugbremsanlagen. Genauer gesagt betrifft die vorliegende Offenbarung eine Pedalsimulationsvorrichtung, bei der eine Rückstellvorrichtung mehrere Rückstellelemente umfasst, die in einer vorbestimmten Weise und vorzugsweise im Wesentlichen aufeinanderfolgend deformierbar sind. Die Offenbarung betrifft ferner eine Kraftfahrzeugbremsanlage, umfassend eine solche Pedalsimulationsvorrichtung sowie ein Verfahren zum Bereitstellen einer haptischen Rückmeldung bei einer Bremspedalbetätigung.

### Stand der Technik

Das Verwenden von Pedalsimulationsvorrichtungen ist insbesondere auf dem Gebiet von Kraftfahrzeugbremsanlagen bekannt. Derartige Pedalsimulationsvorrichtungen werden oftmals im Zusammenhang mit Bremsanlagen verwendet, die eine fahrerunabhängig betätigbare Bremsaktuatoreinheit umfassen (sogenannte Brake-By-Wire-Anlagen). Beispielsweise ist es bekannt, den Bremskolben eines Hauptbremszylinders zumindest während eines Normalbetriebs der Bremsanlage mittels einer elektromechanischen Bremsaktuatoreinheit zu betätigen und darüber gewünschte Bremskräfte zu erzeugen. Das vom Fahrer betätigte Bremspedal wirkt in diesem Fall nicht unmittelbar auf den Bremskolben eines Hauptbremszylinders ein. Stattdessen wird die Pedalbetätigung sensorisch erfasst, um den Fahrerwunsch hinsichtlich der Ausprägung der gewünschten Fahrzeugverzögerung zu ermitteln und daraus Steuersignale für die Bremsaktuatoreinheit abzuleiten.

Um den Fahrer trotz dieser gezielten Entkopplung von dem Bremskolben eine haptische Rückmeldung bezüglich des Bremsvorgangs zu geben, wirkt das Bremspedal stattdessen mit einer Pedalsimulationsvorrichtung zusammen. Diese ist allgemein dazu ausgebildet, vorbestimmte Rückstellkräfte zu erzeugen, die entgegen der Bremspedalbetätigung wirken. Somit kann ein vom Fahrer erwarteter Widerstand bei der Pedalbetätigung erzeugt werden, der zum Beispiel das Aufbauen eines bremswirksamen Hydraulikdrucks suggeriert. Eine derartige Lösung findet sich zum Beispiel in der WO 2012/152352 A1.

Weitere Varianten von Brake-By-Wire-Bremsanlagen sehen vor, dass der Fahrer zwar über das Bremspedal auf den Hauptbremszylinder einwirkt, der hiervon aufgebaute Druck aber zumindest im Normalbetrieb von den Radbremsen abgekoppelt bleibt. Das Bremspedal und/oder der Bremskolben ist stattdessen mit einer Pedalsimulationsvorrichtung hydraulisch gekoppelt und ein bremswirksamer Hydraulikdruck wird durch eine fahrunabhängig betätigte Druckerzeugungseinheit bereitgestellt. Auch in diesem Fall wird die Pedalbetätigung sensorisch erfasst, um den Fahrerwunsch hinsichtlich der Ausprägung der gewünschten Fahrzeugverzögerung zu ermitteln und daraus Steuersignale für die Bremsaktuatoreinheit abzuleiten.

Ein Ziel bei derartigen Pedalsimulationsvorrichtungen ist es, dem Fahrer über eine lange Betriebsdauer eine vorbestimmte haptische Rückmeldung geben zu können. Dies ist bei den bisher bekannten Ansätzen jedoch nur bedingt der Fall.

Das Dokument DE 10 2014 215091 A1 offenbart eine Simulatorvorrichtung für ein Bremssystem eines Fahrzeugs. Das Bremssystem umfasst eine Kolbenkomponente, die ein Innenvolumen in ein erstes und ein zweites Teilvolumen unterteilt. Die beiden Teilvolumina weisen jeweils wenigstens eine Bohrung auf, wobei die erste Bohrung des ersten Teilvolumens zum Befüllen und Steigern des ersten Teilvolumens dient und die zweite Bohrung des zweiten Teilvolumens zum Transferieren von Bremsflüssigkeit aus dem zweiten Teilvolumen dient.

Das Dokument DE 10 2015 200016 A1 offenbart ein kolbenbestücktes Zugankerbauteil für eine Kolben-Zylinder-Vorrichtung eines Fahrzeugbremssystems. Das Zugankerbauteil umfasst dabei einen Zuganker, wobei an einem ersten Endabschnitt des Zugankers ein Schraubenende ausgebildet und an einem zweiten Endabschnitt, der vom ersten Endabschnitt weggerichtet ist, ein Deckelelement angeordnet ist. Weiter umfasst das Zugankerbauteil einen auf dem Zuganker geführten Kolben und ein Abstützelement, das ein Abgleiten des Kolbens von dem Zuganker verhindert, sowie eine Feder, die zum Abstützen des Kolbens dient.

Das Dokument DE 10 2014 224889 A1 offenbart einen Kolben und eine kolbenbestückte Baugruppe für ein Hydraulikaggregat oder eine Kolben-Zylinder-Vorrichtung in einem Fahrzeugbremssystem. Dabei ist an dem Kolben eine Kontaktierfläche für eine Dichtmanschette ausgebildet, wobei die Kontaktierfläche eine von der Dichtmanschette weg gewölbte Form aufweist. Somit kann die Dichtmanschette mittels eines Drucks auf der von dem Kolben weg gerichteten Seite der Dichtmanschette zumindest teilweise in ein Verdrängervolumen gedrückt werden, das von der Kontaktierfläche aufgespannt wird.

Das Dokument WO 2013/113625 A1 offenbart ein Verfahren zum Betreiben einer Bremsanlage für Kraftfahrzeuge. Die Bremsanlage umfasst dabei einen Hauptbremszylinder, der mittels eines Bremspedals betätigbar und trennbar mit wenigstens einer hydraulisch betätigbaren Reifenbremse über wenigstens einen Bremskreis verbunden ist. Weiter umfasst die Bremsanlage einen hydraulisch betätigbaren Pedalwegsimulator, welcher mit dem Hauptbremszylinder verbunden sein kann, sowie eine elektronische Steuereinheit.

### Kurzer Abriss

Es ist eine Pedalsimulationsvorrichtung anzugeben, welche in der Lage ist, eine gewünschte haptische Rückmeldung zuverlässig und präzise bereitzustellen.

Die vorliegende Erfindung stellt eine Pedalsimulationsvorrichtung bereit, umfassend: ein Gehäuse; einen Anschlagbereich, der im Wesentlichen starr mit dem Gehäuse gekoppelt ist; einen Kolben, der in dem Gehäuse aufgenommen unter Durchlaufen aufeinanderfolgender erster und zweiter Betätigungsphasen in eine Betätigungsrichtung verlagerbar ist; eine Rückstellvorrichtung, die dazu ausgebildet ist, eine Rückstellkraft auf den Kolben auszuüben, die entgegen dessen in die Betätigungsrichtung erfolgende Verlagerung wirkt; wobei die Rückstellvorrichtung folgendes umfasst: ein erstes elastisch deformierbares Rückstellelement, das eine im Wesentlichen nichtlineare Federkennline aufweist, ein zweites elastisch deformierbares Rückstellelement, das eine im Wesentlichen lineare Federkennlinie aufweist, und eine Kopplungseinheit, wobei das erste und das zweite Rückstellelement dazu ausgebildet sind, sich zumindest infolge einer Bremspedalbetätigung über die Kopplungseinheit aneinander abstützen, wobei die Kopplungseinheit während der ersten Betätigungsphase des Kolbens unter einer Deformation von überwiegend oder im Wesentlichen ausschließlich dem ersten Rückstellelement verlagerbar ist, wobei die Kopplungseinheit nach dem Durchlaufen der ersten Betätigungsphase dazu ausgebildet ist, sich an dem Anschlagbereich derart abzustützen, dass eine weitere Verlagerung in die Betätigungsrichtung unterbunden ist, und wobei der Kolben bei Durchlaufen der zweiten Betätigungsphase dazu ausgebildet ist, unter einer Deformation von überwiegend oder im Wesentlichen ausschließlich dem zweiten Rückstellelement weiter in die Betätigungsrichtung verlagert zu werden, wobei das erste elastisch deformierbare Rückstellelement eine im Wesentlichen nichtlineare Federkennlinie aufweist und das zweite elastisch deformierbare Rückstellelement eine im Wesentlichen lineare Federkennlinie aufweist, wobei die Rückstellvorrichtung zusätzlich eine Zwischenkopplungseinheit umfasst, über die sich der Kolben an der Kopplungseinheit abstützt, wobei sich das zweite Rückstellelement zumindest bei einer in die Betätigungsrichtung erfolgenden Kolbenverlagerung an der Zwischenkopplungseinheit abstützt, und wobei die Zwischenkopplungseinheit derart angeordnet ist, dass sie zumindest infolge einer Bremspedalbetätigung in Anlage mit der Kopplungseinheit und/oder mit dem Anschlagbereich bringbar ist.

Das Gehäuse kann einen Zylinder oder, anders ausgedrückt, eine Zylinderbohrung umfassen und gemeinsam mit dem Kolben eine Druckkammer begrenzen. In das Gehäuse kann ein Bremsflüssigkeitsvolumen nach Maßgabe einer Bremspedalbetätigung einleitbar sein, um den Kolben innerhalb des Gehäuses zu verschieben. Allgemein kann der Kolben entlang einer Verlagerungsachse verschiebbar sein. Diese kann mit einer Längsachse des Gehäuses und/oder einer etwaigen Zylinderbohrung hiervon zusammenfallen. Sofern nicht anders angegeben oder ersichtlich, beziehen sich die Begriffe "axial" und "radial" im Rahmen der vorliegenden Erfindung auf diese Verlagerungsachse. Das Verlagern des Kolbens in die Betätigungsrichtung kann einem Verlagern in eine Richtung entlang der Verlagerungsachse entsprechen. Wie erwähnt, kann dieses Verlagern maßgeblich oder ausschließlich nach Maßgabe einer aktiven Bremspedalbetätigung erfolgen, bei der beispielsweise ein Hydraulikvolumen in das Gehäuse eingeleitet wird. Hingegen kann ein Verlagern entgegen der Betätigungsrichtung maßgeblich oder ausschließlich unter Einwirken der Rückstellvorrichtung erfolgen. Dies tritt ferner vorzugsweise dann auf, wenn der Fahrer die Bremspedalbetätigung beendet und/oder das Bremspedal freigibt, sodass es in eine unbetätigte Ausgangsposition zurückkehrt.

Die erste Betätigungsphase kann das Verlagern des Kolbens über eine vorbestimmte Verlagerungstrecke in die Betätigungsrichtung umfassen, insbesondere aus einer unbetätigten Ausgangsstellung des Kolbens heraus. Ebenso kann die erste Betätigungsphase auf eine nachfolgend erläuterte Anfangsbetätigungsphase folgen. Die zweite Betätigungsphase kann das Verlagern des Kolbens über eine weitere vorbestimmte Verlagerungsstrecke in die Betätigungsrichtung umfassen. Die Verlagerungsstrecken der ersten und zweiten Betätigungsphasen, aber auch eine etwaige nachfolgend erläuterte Anfangsbetätigungsphase, können unmittelbar aneinander anschließen oder, anders ausgedrückt, ineinander übergehen. Insgesamt kann der Kolben über einen maximal verfügbaren Verlagerungsweg in die Betätigungsrichtung verlagerbar sein. Dieser Verlagerungsweg kann sich aus den vorstehend erläuterten Verlagerungsstrecken der jeweiligen Betätigungsphasen zusammensetzen.

Weiterhin können die Verlagerungsstrecken im Wesentlichen identisch sein. Alternativ kann eine Verlagerungsstrecke während der ersten Betätigungsphase geringer sein als eine Verlagerungsstrecke während der zweiten Betätigungsphase, oder umgekehrt. Vorzugsweise übersteigt die Verlagerungsstrecke während der ersten Betätigungsphase die Verlagerungsstrecke der zweiten Betätigungsphase (oder umgekehrt) um einen Faktor von nicht weniger als 1,2, nicht weniger als 1,6, nicht weniger als 2,0 oder nicht weniger 3,0.

Der Kolben kann ebenfalls hohlzylindrisch ausgebildet sein und zum Beispiel die Rückstellvorrichtung (und insbesondere dessen zweites Rückstellelement) zumindest abschnittsweise aufnehmen. Der Kolben kann sich an der Rückstellvorrichtung abstützen und nach Maßgabe einer Verlagerung in die Betätigungsrichtung Kräfte darauf ausüben. Gemäß einer Variante liegt der Kolben an dem zweiten Rückstellelement an.

Eine Weiterbildung sieht vor, dass der Kolben einen Aufnahmeraum mit dem Gehäuse begrenzt, der unabhängig von einer etwaigen Druckkammer ausgebildet ist. In dem Aufnahmeraum kann die Rückstellvorrichtung aufgenommen sein. Eine Verlagerung des Kolbens in die Betätigungsrichtung kann dabei mit einer Vergrößerung des Volumens der Druckkammer einhergehen, wobei sich das Volumen des Aufnahmeraums korrespondierend und insbesondere um den gleichen Betrag verkleinert. Bei einer Verlagerung des Kolbens entgegen der Betätigungsrichtung kann sich hingegen das Volumen der Druckkammer verkleinern und das Volumen des Aufnahmeraums korrespondierend und insbesondere um den gleichen Betrag vergrößern.

Der Anschlagbereich der Pedalsimulationsvorrichtung kann in einem dem Kolben gegenüberliegenden Bereich des Gehäuses bereitgestellt sein. Beispielsweise kann der Kolben bei einer Verlagerung in die Betätigungsrichtung auf den Anschlagbereich zubewegt werden. Der Anschlagbereich kann zumindest teilweise in einer Deckelanordnung ausgebildet sein, die mit dem Gehäuse koppelbar ist. Die Deckelanordnung kann gemeinsam mit dem Gehäuse einen etwaigen Aufnahmeraum definieren, in dem die Rückstellvorrichtung aufnehmen ist.

Die im Wesentlichen starre Kopplung des Anschlagsbereichs mit dem Gehäuse kann beinhalten, dass ein Kraftfluss zwischen dem Anschlagbereich und dem Gehäuse erzeugbar ist, der sich durch im Wesentlichen nicht oder nur geringfügig elastisch deformierbare Elemente erstreckt. Mit anderen Worten kann es sich um eine mechanisch starre Kopplung handeln. Allgemein kann vorgesehen sein, dass auf den Anschlagbereich ausgeübte Kräfte in das Gehäuse einleitbar sind, ohne dass der Anschlagbereich oder ein den Anschlagbereich umfassendes Element eine wesentliche Verlagerung und/oder Deformation erfährt.

Übergeordnet kann auch bereits zu Beginn der ersten Betätigungsphase ein zumindest mittelbares Abstützen der Kopplungseinheit an dem Anschlagbereich vorgesehen sein, allerdings derart, dass nach wie vor eine Relativverlagerung der Kopplungseinheit zu dem Anschlagbereich in die Betätigungsrichtung ermöglicht wird. Anders ausgedrückt kann zunächst ein axiales Spiel zwischen diesen Elementen vorliegen. Weiterhin kann ein nachstehend erläutertes Anordnen der Kopplungseinheit an einem Führungsbereich des Anschlagbereichs vorgesehen sein. Während der ersten Betätigungsphase kann ein Abgleiten der Kopplungseinheit entlang des Führungsbereichs unter Überwindung des axialen Spiels erfolgen. Nach dem Durchlaufen der ersten Betätigungsphase kann dann aber ein derartiges Abstützen der Kopplungseinheit an dem Anschlagbereich vorgesehen sein, beispielsweise durch in Anlage geraten mit einer etwaigen Anschlagfläche des Anschlagbereichs, dass keine weitere Verlagerung in die Betätigungsrichtung mehr möglich ist.

Die Rückstellvorrichtung kann allgemein einen vorbestimmten Verlauf der Rückstellkraft in Abhängigkeit einer Kolbenverlagerung in die Betätigungsrichtung bereitstellen. Dieser Verlauf kann als eine sogenannte Simulations- oder Pedalkennlinie bezeichnet werden. Über den Verlauf der Rückstellkraft kann die haptische Rückmeldung festgelegt werden, die der Fahrer zu unterschiedlichen Betätigungszeitpunkten oder, anders ausgedrückt, bei Durchlaufen unterschiedlicher Bereiche des insgesamt verfügbaren Pedalbetätigungswegs erfährt. Beispielsweise können über eine erste Pedalbetätigungsstrecke, die mit der vorstehend erläuterten ersten Betätigungsphase der Pedalsimulationsvorrichtung korrespondieren kann, andere Rückstellkräfte erzeugt werden, als über eine zweite Pedalbetätigungsstrecke, welche auf die erste Betätigungsstrecke folgt und die mit der zweiten Betätigungsphase der Pedalsimulationsvorrichtung korrespondieren kann. Übergeordnet kann dabei vorgesehen sein, dass die Rückstellkräfte bei einer fortschreitenden Pedalbetätigung (und/oder einer fortschreitenden Verlagerung des Kolbens in die Betätigungsrichtung) zunehmen.

Das erste und zweite Rückstellelement können über den insgesamt möglichen Verlagerungsweg des Kolbens in die Betätigungsrichtung betrachtet voneinander abweichende Federkennlinien aufweisen. Die im Wesentlichen nichtlineare Federkennlinie des ersten Rückstellelements kann beinhalten, dass die Federkennlinie über den Verlagerungsweg des Kolbens zumindest während der ersten Betätigungsphase betrachtet wenigstens abschnittsweise und vorzugsweise größtenteils oder vollständig einen nichtlinearen Verlauf aufweist. Dabei kann es sich um einen allgemein gekrümmten und/oder einen progressiven Verlauf handeln.

Die im Wesentlichen lineare Federkennlinie des zweiten Rückstellelements kann beinhalten, dass die Federkennlinie über den Verlagerungsweg des Kolbens zumindest während der zweiten Betätigungsphase betrachtet wenigstens abschnittsweise und vorzugsweise größtenteils oder vollständig einen linearen Verlauf aufweist. Dabei kann es sich insbesondere um einen linear zunehmenden Verlauf mit einem Steigungswinkel von mehr als 30°, mehr als 40°, mehr als 50° oder mehr als 60° handeln.

Die Kopplungseinheit kann verlagerbar in der Pedalsimulationsvorrichtung und insbesondere in dem Gehäuse aufgenommen sein (zum Beispiel in einem etwaigen Aufnahmeraum des Gehäuses für die Rückstellvorrichtung). Die Kopplungseinheit kann ebenfalls entlang der Verlagerungsachse verlagerbar sein. Gemäß einer Variante ist die Kopplungseinheit zumindest im Rahmen der ersten Betätigungsphase gemeinsam mit dem Kolben in die Betätigungsrichtung verlagerbar und/oder nach Beendigung der Pedalbetätigung entgegen der Betätigungsrichtung in eine Ausgangsstellung zurück verlagerbar.

Die Kopplungseinheit kann einen Anlageabschnitt aufweisen, an dem sich zumindest eines der Rückstellelemente abstützen und/oder unmittelbar daran anliegen kann. Der Anlageabschnitt kann scheiben- oder tellerförmig ausgebildet sein. Der Anlageabschnitt kann die Verlagerungsachse im Wesentlichen mittig aufnehmen. Die Kopplungseinheit kann ferner einen Wechselwirkungsbereich aufweisen, über den sie sich an dem Anschlagbereich abstützen kann. Der Wechselwirkungsbereich kann sich ausgehend von dem Anlageabschnitt erstrecken oder von diesen umfasst sein. Der Wechselwirkungsbereich kann einen nachstehend erläuterten Aufnahmebereich umfassen und beispielsweise als ein sich entlang der Verlagerungsachse erstreckender länglicher hohlzylindrischer Bereich ausgebildet sein.

Allgemein kann die Kopplungseinheit entlang der Verlagerungsachse betrachtet zumindest abschnittsweise zwischen den Rückstellelementen positioniert sein. Vorzugsweise liegen beide Rückstellelemente an der Kopplungseinheit an. Beispielsweise kann das erste Rückstellelement an einer ersten Seite der Kopplungseinheit anliegen und das zweite Rückstellelement an einer hiervon abgewandten zweiten Seite. Dabei kann vorgesehen sein, dass sich die Rückstellelemente nicht kontaktieren und/oder axial überlappungsfrei sind.

Gemäß einer Variante stützen sich das erste und zweite Rückstellelement auch ohne eine Bremspedalbetätigung (d.h., in einem unbetätigten Zustand der Pedalsimulationsvorrichtung) im Wesentlichen spielfrei an der Kopplungseinheit ab. Vorzugsweise liegen sie im Wesentlichen spielfrei unmittelbar an der Kopplungseinheit an. Der spielfreie Zustand kann auch während der Betätigung der Pedalsimulationsvorrichtung im Wesentlichen aufrechterhalten werden.

Während der ersten Betätigungsphase des Kolbens kann dieser eine Kraft auf die Rückstellvorrichtung ausüben, die insbesondere mittelbar über das zweite Rückstellelement auf die Kopplungseinheit einwirkt. Die Kopplungseinheit kann dabei nach Maßgabe der Kolbenverlagerung und insbesondere parallel und/oder proportional hierzu ebenfalls in die Betätigungsrichtung verlagerbar sein. Entsprechend kann sie einen Verlagerungsweg zurücklegen, der sich je nach Deformation der Rückstellelemente in einem vorbestimmten Maß von der vorstehend erläuterten Verlagerungsstrecke des Kolbens während der ersten Betätigungsphase unterscheiden kann.

Im Rahmen der vorliegenden Erfindung kann sich eine Deformation des ersten und des zweiten Rückstellelements (aber auch des nachfolgend erläuterten Zwischenrückstellelements) insbesondere auf eine Deformation entlang der Verlagerungsachse und/oder in die Betätigungsrichtung beziehen. Genauer gesagt kann hiervon eine axiale Längenänderung der entsprechenden Elemente entlang der Verlagerungsachse umfasst sein, zum Beispiel eine axiale Stauchung. Übergeordnet kann die Verlagerung der Kopplungseinheit während der ersten Betätigungsphase in eine Deformation des ersten Rückstellelements umgewandelt werden, da sich die Kopplungseinheit und das erste Rückstellelement aneinander abstützen können. Das erste Rückstellelement kann im Wesentlichen korrespondierend zu der Verlagerung der Kopplungseinheit deformiert und insbesondere axial gestaucht werden.

Andererseits kann vorgesehen sein, dass während der ersten Betätigungsphase das zweite Rückstellelement nur geringfügig deformiert und insbesondere nur geringfügig axial gestaucht wird. Die Rückstellvorrichtung kann somit während der ersten Betätigungsphase maßgeblich im Bereich des ersten Rückstellelements deformiert werden, sodass die während dieser Betätigungsphase erzeugten Rückstellkräfte auch maßgeblich von dem ersten Rückstellelement bereitgestellt werden.

Die überwiegende Deformation des ersten Rückstellelements während der ersten Betätigungsphase kann beinhalten, dass das erste Rückstellelement um ein größeres Maß deformiert und insbesondere axial gestaucht wird als das zweite Rückstellelement. Beispielsweise kann das erste Rückstellelement in einem Maß deformiert (oder axial gestaucht) werden, dass eine entsprechende Deformation des zweiten Rückstellelements während der ersten Betätigungsphase um einen Faktor von wenigstens 1,5, wenigstens 2,0, wenigstens 4,0, wenigstens 8,0 oder wenigstens 10,0 überschreitet. Alternativ kann während der ersten Betätigungsphase im Wesentlichen ausschließlich das erste Rückstellelement deformiert werden, wohingegen das zweite Rückstellelement im Wesentlichen deformationsfrei bleibt. Dies kann beispielsweise dann der Fall sein, wenn eine Deformation des ersten Rückstellelements eine Deformation des zweiten Rückstellelements um einen Faktor von mehr als 20, mehr als 30 oder mehr als 40 überschreitet.

Zusammengefasst kann somit während der ersten Betätigungsphase vorgesehen sein, dass die Rückstellkräfte der Rückstellvorrichtung maßgeblich oder im Wesentlichen ausschließlich durch das erste Rückstellelement bereitgestellt werden, wohingegen die von dem zweiten Rückstellelement bereitgestellten Rückstellkräfte geringer ausfallen oder nahezu vernachlässigbar sind. Mit anderen Worten kann ein Verlauf der von der Rückstellvorrichtung erzeugten Rückstellkräfte während der ersten Betätigungsphase und somit ein Verlauf der Simulationskennlinie maßgeblich von dem ersten Rückstellelement bestimmt werden, also ebenfalls einen im Wesentlichen nichtlinearen Verlauf aufweisen.

Spätestens nach Durchlaufen der ersten Betätigungsphase kann sich die Kopplungseinheit an dem Anschlagbereich abstützen und insbesondere unmittelbar damit in Anlage geraten. Bis dahin kann die Kopplungseinheit anlagefrei von dem Anschlagbereich oder zumindest von einer Anschlagfläche hiervon angeordnet sein. Gemäß der vorliegenden Erfindung erfolgt das Abstützen nach der ersten Betätigungsphase derart, dass eine weitere Verlagerung in die Betätigungsrichtung unterbunden ist. Mit anderen Worten kann der Anschlagbereich ein Fortsetzen der gemeinsamen Verlagerung von Kopplungseinheit und Kolben in die Betätigungsrichtung ab diesem Zeitpunkt blockieren.

Unmittelbar im Anschluss an das Unterbinden der weiteren Verlagerung der Kopplungseinheit kann die zweite Betätigungsphase beginnen. Bei einer weiteren Verlagerung des Kolbens in die Betätigungsrichtung kann, insbesondere aufgrund der ausbleibenden weiteren Verlagerung der Kopplungseinheit, im Wesentlichen keine weitere Deformation des ersten Rückstellelements erfolgen. Stattdessen kann dieses den Deformationszustand zum Ende der ersten Betätigungsphase im Wesentlichen beibehalten.

Das überwiegende oder ausschließliche Deformieren des zweiten Rückstellelements während der zweiten Betätigungsphase kann wiederum beinhalten, dass das zweite Rückstellelement um ein größeres Maß deformiert und insbesondere axial gestaucht wird als das erste Rückstellelement. Beispielsweise kann das zweite Rückstellelement in einem Maß deformiert (oder axial gestaucht) werden, das eine entsprechende Deformation des ersten Rückstellelements während der zweiten Betätigungsphase um einen Faktor von wenigstens 1,5, wenigstens 2,0, wenigstens 4,0, wenigstens 8,0 oder wenigstens 10,0 überschreitet. Alternativ kann während der zweiten Betätigungsphase im Wesentlichen ausschließlich das zweite Rückstellelement deformiert werden. Das erste Rückstellelement kann hingegen einen im Wesentlichen gleichbleibenden Deformationszustand beibehalten. Dies kann beispielsweise dann der Fall sein, wenn eine Deformation des zweiten Rückstellelements eine Deformation des ersten Rückstellelements um einen Faktor von mehr als 20, mehr als 30 oder mehr als 40 überschreitet.

Zusammengefasst kann somit während der zweiten Betätigungsphase vorgesehen sein, dass die Rückstellkräfte der Rückstellvorrichtung maßgeblich oder im Wesentlichen ausschließlich durch das zweite Rückstellelement bereitgestellt werden, wohingegen die von dem ersten Rückstellelement bereitgestellten Rückstellkräfte geringer ausfallen und/oder keine signifikanten weiteren Änderungen erfahren. Mit anderen Worten kann ein Verlauf der von der Rückstellvorrichtung erzeugten Rückstellkräfte und somit ein Verlauf der Simulationsscanlinie während der zweiten Betätigungsphase maßgeblich von dem zweiten Rückstellelement bestimmt werden, also ebenfalls einen im Wesentlichen linearen Verlauf aufweisen.

Eine Weiterbildung sieht vor, dass das erste Rückstellelement dazu ausgebildet ist während der zweiten Betätigungsphase einen im Wesentlichen gleichbleibenden Deformationszustand beizubehalten. Hierzu kann das erste Rückstellelement zumindest abschnittsweise zwischen der während dieser Betätigungsphase nicht weiter verlagerbaren Kopplungseinheit und einem gegenüberliegenden Gehäusebereich angeordnet sein. Allgemein kann das erste Rückstellelement in der zweiten Betätigungsphase keine zusätzliche axiale Stauchung, vorzugsweise aber auch keine axiale Entspannung oder, anders ausgedrückt, keine axiale Verlängerung erfahren.

Das zweite und das erste Rückstellelement können allgemein derart angeordnet sein, dass sie in Serie wirken. Insbesondere können die Rückstellelemente entlang der Verlagerungsachse betrachtet in Serie oder, anders ausgedrückt, aufeinanderfolgend angeordnet sein. In diesem Zusammenhang kann auch die Kopplungseinheit zumindest abschnittsweise axial zwischen den Rückstellelement angeordnet sein. Allgemein sind aber auch axiale Überlappungen zwischen den Rückstellelementen und/oder der Kopplungseinheit denkbar.

Gemäß einer Variante kann sich das erste Rückstellelement mit einem ersten Endbereich an der Kopplungseinheit abstützen und mit einem zweiten Endbereich an einem Bodenbereich des Gehäuses. Der Bodenbereich kann dem Kolben axial gegenüberliegen und/oder den Anschlagbereich zumindest teilweise umfassen. Insbesondere kann der Bodenbereich von einer Deckelanordnung umfasst sein, die vorzugsweise mit dem Kolben einen Aufnahmeraum für die Rückstellvorrichtung begrenzt. Bei den Endbereichen kann es sich wiederum um entlang der Verlagerungsachse betrachtet voneinander beabstandete und/oder axiale Endbereiche des ersten Rückstellelements handeln. Die Endbereiche können der Kopplungseinheit und dem Bodenbereich zugewandt sein, wobei vorzugsweise wenigstens einer der Endbereiche unmittelbar an der Kopplungseinheit beziehungsweise dem Bodenbereich anliegt. Übergeordnet kann das erste Rückstellelement somit zumindest abschnittsweise axial zwischen der Kopplungseinheit und dem Bodenbereich angeordnet sein und/oder axial zwischen dem zweiten Rückstellelement und dem Bodenbereich.

Eine Variante sieht vor, dass ausgehend von dem Kolben und entlang der Verlagerungsachse in die Betätigungsrichtung betrachtet die Pedalsimulationsvorrichtung die folgende Abfolge von Komponenten aufweist: Kolben, zweites Rückstellelement, Kopplungseinheit, erstes Rückstellelement, (optionaler) Bodenbereich. Zumindest axial zueinander benachbarte Elemente können sich dabei auch axial überlappen. Der Bodenbereich kann den Anschlagbereich umfassen.

Eine Weiterbildung sieht vor, dass das erste Rückstellelement einen geringeren Deformationswiderstand aufweist als das zweite Rückstellelement. Mit anderen Worten kann das erste Rückstellelement bei einwirkenden Kräften bereits bei geringeren Kraftbeträgen und/oder in einem größeren Ausmaß nachgeben als das zweite Rückstellelement. Der Deformationswiderstand kann sich allgemein auf die Nachgiebigkeit des Rückstellelements auf eine anderweitig geeignete Federkenngröße beziehen, zum Beispiel eine absolute und/oder eine durchschnittliche Federkonstante. Letzteres kann insbesondere im Fall einer nichtlinearen Federkennlinie relevant sein. Über den Deformationswiderstand kann allgemein das Deformationsverhalten der Rückstellelemente eingestellt werden und insbesondere das voneinander abweichende Deformationsverhalten, das zu den vorstehend geschilderten Deformationsabfolgen während der ersten und zweiten Betätigungsphase führt.

In diesem Zusammenhang kann ferner vorgesehen sein, dass das geschilderte Verhältnis der Deformationswiderstände wenigstens während der ersten Betätigungsphase aufrechterhalten wird. Mit anderen Worten kann während der gesamten ersten Betätigungsphase vorgesehen sein, dass das erste Rückstellelement einen geringeren Deformationswiderstand gegenüber dem zweiten Rückstellelement beibehält.

Das erste Rückstellelement kann verschiedene Deformationsabschnitte umfassen, die insbesondere axial aufeinanderfolgend angeordnet sein können. Die Deformationsabschnitte können ein voneinander abweichendes Deformationsverhalten aufweisen. Insbesondere kann ein erster Deformationsabschnitt einen gegenüber einem zweiten Deformationsabschnitt verringerten Deformationswiderstand aufweisen (zum Beispiel aufgrund unterschiedlicher Federkonstanten). Bei einem Einleiten von Deformationskräften (zum Beispiel infolge einer Verlagerung der Kopplungseinheit) kann der erste Deformationsabschnitt daraufhin zunächst eine größere Deformation erfahren als der zweite Deformationsabschnitt. Die von dem ersten Rückstellelement erzeugten Rückstellkräfte können somit zunächst überwiegend oder im Wesentlichen ausschließlich von dem ersten Deformationsabschnitt bestimmt werden. Übersteigen die eingeleiteten Kräfte einen Schwellenwert, bei dem beispielsweise eine weitere Deformation des ersten Deformationsabschnitts nicht oder nur geringfügig fortsetzbar ist, kann hingegen der zweite Deformationsabschnitt einen größeren Anteil an der Deformation des ersten Rückstellelement einnehmen.

Werden die Deformationskräfte weiter erhöht, zum Beispiel durch ein Fortsetzen der Verlagerung der Kopplungseinheit in die Betätigungsrichtung, können die von dem ersten Rückstellelement erzeugten Rückstellkräfte somit überwiegend oder im Wesentlichen ausschließlich durch den zweiten Deformationsabschnitt bereitgestellt werden.

Eine Weiterbildung sieht vor, dass das erste Rückstellelement ein Gummifederelement umfasst. Dieses kann im Wesentlichen zylindrisch und/oder blockförmig ausgebildet sein. Gemäß einer Variante umfasst das Gummifederelement unterschiedlich dimensionierte und vorzugsweise axial aufeinanderfolgende Abschnitte, die unterschiedliche Deformationsabschnitte des ersten Rückstellelements gemäß der vorstehend erläuterten Art bilden. Diese Abschnitte können eine Durchmesserstufe definieren.

Das Gummifederelement kann zumindest abschnittsweise an oder auf dem Anschlagbereich angeordnet sein und/oder an oder auf einem nachfolgend erläuterten Führungsbereich für die Kopplungseinheit. Gemäß einer Variante umfasst das Gummifederelement eine Bohrung, die sich vorzugsweise entlang der Verlagerungsachse erstreckt. In dieser Bohrung kann der Anschlagbereich und/oder der nachfolgend erläuterte Führungsbereich aufnehmbar sein, insbesondere derart, dass das Gummifederelement radial in Position gehalten wird. Die axialen Endbereiche des Gummifederelements können ferner Stirnflächen umfassen, um mit der Kopplungseinheit und/oder einem Bodenbereich des Gehäuses in Anlage zu stehen oder in Anlage gebracht zu werden.

Vorzugsweise nimmt das Gummifederelement in einem unbetätigten Zustand des Kolbens einen im Wesentlichen vorspannungsfreien Zustand ein. In dem unbetätigten Zustand kann der Kolben allgemein eine Ausgangsposition einnehmen, in die er zum Beispiel durch die Rückstellvorrichtung gedrängt wurde und/oder durch die Rückstellvorrichtung gehalten wird. Dabei kann vorgesehen sein, dass der Kolben diese Ausgangsposition erst dann verlässt, wenn eine Pedalbetätigung durch den Fahrer erfolgt. Bei Einnahme dieser Ausgangsposition kann vorgesehen sein, dass zumindest das erste Rückstellelement (aber auch beide Rückstellelemente) einen im Wesentlichen vorspannungsfreien Zustand einnehmen. Erst infolge einer einsetzenden Verlagerung des Kolbens in die Betätigungsrichtung können die Rückstellelemente daraufhin unter eine (mechanische) Spannung gesetzt werden.

Eine Weiterbildung sieht vor, dass das zweite Rückstellelement ein Spiralfederelement umfasst. Das Spiralfederelement kann ein metallisches Material umfassen oder aus diesem ausgebildet sein. Das Spiralfederelement kann sich konzentrisch um die Verlagerungsachse erstrecken. Das Spiralfederelement kann zumindest abschnittsweise an einer Innenwand des Kolbens anliegen, insbesondere wenn dieser mit einem hohlzylindrischen Aufnahmebereich ausgebildet ist. Der Vollständigkeit halber ist anzumerken, dass auch die Kopplungseinheit an einer Gehäuseinnenwand anliegen oder damit in Anlage bringbar sein kann.

Der Anschlagbereich kann einen axial hervorspringen Bereich umfassen, der sich insbesondere ausgehend von einem Bodenbereich einer etwaigen Deckelanordnung des Gehäuses erstrecken kann. Gemäß einer Variante ist der Anschlagbereich zylindrisch und/oder stiftförmig ausgebildet, vorzugsweise mit einem gerundeten oder kreisrunden Querschnitt. Der Anschlagbereich kann sich ferner entgegen der Betätigungsrichtung und/oder in Richtung des Kolbens erstrecken. Der Anschlagbereich kann eine Außenumfangsfläche umfassen und/oder einen axialen Endbereich, welcher dem Kolben zugewandt ist. Wie vorstehend erwähnt, kann das erste Rückstellelement an dem Anschlagbereich angeordnet sein und insbesondere über eine Bohrung auf dessen Außenumfangsfläche aufgeschoben sowie radial daran gehalten werden. Der Anschlagbereich ist vorzugsweise einstückig mit einem Gehäuseabschnitt ausgebildet.

Der Anschlagbereich und die Kopplungseinheit können einander axial überlappen, insbesondere wobei eine axiale Überlappungslänge dieser Elemente nach Maßgabe einer Verlagerung des Kolbens in die erste Betätigungsrichtung veränderbar ist, beispielsweise vergrößerbar.

Zusätzlich oder alternativ können der Anschlagbereich und die Kopplungseinheit miteinander in Eingriff stehen oder miteinander in Eingriff bringbar sein, insbesondere derart, dass eine axiale Eingriffslänge dieser Elemente nach Maßgabe einer Verlagerung des Kolbens in die Betätigungsrichtung veränderbar ist, insbesondere vergrö-ßerbar. Der Eingriff kann umfassen, dass wenigstens eines der Elemente von Anschlagbereich und Kopplungseinheit zumindest abschnittsweise in dem jeweiligen anderen Element von Anschlagbereich und Kopplungseinheit aufgenommen oder aufnehmbar ist. Die axiale Eingriffslänge kann eine Länge umfassen, entlang derer der Anschlagbereich und die Kopplungseinheit miteinander in Eingriff stehen.

Allgemein kann ferner vorgesehen sein, dass der Anschlagbereich zumindest abschnittsweise in einem Aufnahmebereich der Kopplungseinheit aufgenommen oder aufnehmbar ist. Der Aufnahmebereich kann als eine Ausnehmung, eine Bohrung oder als ein allgemein hohlzylindrischer Bereich ausgebildet sein. Der Aufnahmebereich kann ferner langgestreckt sowie sacklochfömig ausgebildet sein und/oder sich entlang der Verlagerungsachse erstrecken. Gemäß einer Variante ist der Aufnahmebereich mittig innerhalb der Kopplungseinheit angeordnet. Der Aufnahmebereich kann von einem insbesondere teller- oder scheibenförmigen Anlageabschnitt der Kopplungseinheit axial hervorstehen. Dies kann entgegen der ersten Betätigungsrichtung und/oder in Richtung des Kolbens erfolgen. Allgemein kann der Aufnahmebereich mit dem zweiten Rückstellelement axial überlappen und/oder zumindest abschnittsweise darin aufgenommen sein.

Der Anschlagbereich kann sich in den Aufnahmebereich hinein erstrecken und/oder bei einer Verlagerung der Kopplungseinheit in die Betätigungsrichtung darin aufnehmbar sein. Dies kann dem vorstehend erläuterten axialen Überlappen und/oder in Eingriff stehen von Anschlagbereich und Kopplungseinheit entsprechen. Gemäß einer Variante wird der Aufnahmebereich bei einer Verlagerung in die Betätigungsrichtung auf den Aufnahmebereich aufgeschoben. Es kann aber auch vorgesehen sein, dass in einer unbetätigten Ausgangsstellung des Kolbens der Aufnahmebereich und der Anschlagbereich bereits um ein vorbestimmtes Maß ineinandergreifen beziehungsweise aufeinander aufgeschoben sind. Bei einer Verlagerung der Kopplungseinheit in die erste Betätigungsrichtung kann dieses Maß dann vorzugsweise kontinuierlich vergrö-ßert werden. Zum Beispiel kann eine Länge eines Abschnitts des Anschlagbereichs, der in dem Aufnahmebereich aufgenommen ist, bei einer Verlagerung der Kopplungseinheit in die Betätigungsrichtung zunehmen.

Gemäß einer weiteren Ausführungsform ist vorgesehen, dass der Anschlagbereich eine Anschlagfläche umfasst und der Aufnahmebereich eine Kontaktfläche umfasst, wobei die Kontaktfläche nach dem Durchlaufen der ersten Betätigungsphase in Anlage mit der Anschlagfläche bringbar ist. Bei der Kontaktfläche kann es sich um eine Boden und/oder Stirnfläche des Aufnahmebereichs der Kopplungseinheit handeln. Bei der Anschlagfläche kann es sich um eine der Kontaktfläche zugewandte Stirnfläche des Anschlagbereichs handeln. Die Anschlagfläche kann von einem axialen Endbereich des Anschlagbereichs umfasst sein oder diesen bilden. Im Rahmen einer Verlagerung der Kopplungseinheit in die Betätigungsrichtung kann ein axialer Abstand zwischen der Anschlagfläche und der Kontaktfläche verringert werden und nach dem Durchlaufen der ersten Betätigungsphase auf null reduziert werden. Wenn die Kontaktfläche in Anlage mit der Anschlagfläche gelangt, kann hierüber die weitere Verlagerung der Kopplungseinheit unterbunden sein.

Eine Weiterbildung sieht vor, dass der Anschlagbereich einen Führungsbereich umfasst, an dem sich die Kopplungseinheit abstützt, und wobei der Führungsbereich dazu ausgebildet ist, die Kopplungseinheit bei einer Kolbenverlagerung während der ersten Betätigungsphase zumindest abschnittsweise verlagerbar zu führen. Das zumindest abschnittsweise verlagerbare Führen kann ein Führen entlang einer vorbestimmten Verlagerungsstrecke und/oder entlang der Verlagerungsachse umfassen. Vorzugsweise kann es sich dabei um mehr als die Hälfte oder auch die gesamte mögliche Verlagerungsstrecke der Kopplungseinheit handeln, die in Folge einer Kolbenverlagerung in die Betätigungsrichtung zurückgelegt werden kann. Somit kann auch vorgesehen sein, dass die Kopplungseinheit zumindest während der ersten Betätigungsphase eine im Wesentlichen konstant führende Unterstützung durch den Anschlagbereich erfährt und dabei auch relativ zu diesem verlagerbar ist, zum Beispiel unter Überwindung des erläuterten anfänglichen axialen Spiels.

Der Führungsbereich kann an einer Außenumfangsfläche des Anschlagbereichs bereitgestellt sein. Die Kopplungseinheit kann an dem Führungsbereich axial abgleiten. Der Führungsbereich kann ferner einen Abschnitt des Anschlagbereichs bilden und/oder umfassen, der in der vorstehend geschilderten Weise mit der Kopplungseinheit axial überlappt und/oder hiermit in Eingriff steht. Gemäß einer Variante liegt der Führungsbereich an einer Innenwand eines hohlzylindrisch ausgebildeten Aufnahmeabschnitts der Kopplungseinheit an, um die Führungswirkung bereitzustellen.

Die Pedalsimulationsvorrichtung umfasst ferner eine Zwischenkopplungseinheit, über die sich der Kolben an der Kopplungseinheit abstützt. Mit anderen Worten kann die Zwischenkopplungseinheit entlang eines Kraftflusses bei der Kolbenverlagerung betrachtet zwischen dem Kolben und der Kopplungseinheit angeordnet sein. Zusätzlich oder alternativ kann die Zwischenkopplungseinheit zumindest abschnittsweise axial zwischen dem Kolben und der Kopplungseinheit angeordnet sein. Allgemein kann die Zwischenkopplungseinheit entlang der Verlagerungsachse und insbesondere in die Betätigungsrichtung verlagerbar sein. Dies kann wiederum nach Maßgabe einer Kolbenverlagerung erfolgen. Die Zwischenkopplungseinheit kann ferner einen Bestandteil der Rückstellvorrichtung bilden und/oder komplementär zu der Kopplungseinheit geformt sein.

Eine Variante sieht vor, dass die Zwischenkopplungseinheit einen dem Kolben zugewandten Bereich und einen der Kopplungseinheit zugewandten Bereich umfasst. Ferner kann die Zwischenkopplungseinheit wiederum einen scheiben- und/oder tellerförmigen Anlageabschnitt umfassen. Ebenso kann sie einen Aufnahmebereich umfassen, in dem eine weitere Komponente zumindest abschnittsweise aufnehmbar ist, zum Beispiel ein Aufnahmebereich der Kopplungseinheit oder ein nachfolgend erläutertes Zwischenrückstellelement.

Das zweite Rückstellelement stützt sich zumindest bei einer in die Betätigungsrichtung erfolgenden Kolbenverlagerung an der Zwischenkopplungseinheit ab und/oder gerät hiermit in Anlage. Daraufhin kann die Kopplungseinheit verlagert werden, insbesondere in die Betätigungsrichtung und/oder in Richtung der Kopplungseinheit.

Weiterhin kann vorgesehen sein, dass die Zwischenkopplungseinheit ein Zwischenrückstellelement umfasst, das einen geringeren Deformationswiderstand aufweist als das erste und/oder das zweite Rückstellelement. Das Zwischenrückstellelement kann in Serie mit dem ersten und/oder dem zweiten Rückstellelement wirken. Insbesondere kann das Zwischenrückstellelement zumindest abschnittsweise axial aufeinanderfolgend mit dem ersten und/oder dem zweiten Rückstellelement angeordnet sein. Ebenso kann das Zwischenrückstellelement zumindest mit einem von erstem und zweitem Rückstellelement axial überlappen. Eine weitere Variante sieht vor, dass das zweite Rückstellelement zumindest abschnittsweise axial zwischen dem ersten Rückstellelement und dem Zwischenrückstellelement angeordnet ist. Allgemein kann das Zwischenrückstellelement ferner eine im Wesentlichen lineare Federkennlinie aufweisen und/oder ein Spiralfederelement umfassen.

Aufgrund des geringeren Deformationswiderstandes, der wiederum über eine geeignete Federkonstante einstellbar ist, kann vorgesehen sein, dass bei einer Kolbenverlagerung in die Betätigungsrichtung aus dessen Ausgangsstellung das Zwischenrückstellelement zuerst eine signifikante und/oder vollständige Deformation erfährt, insbesondere eine axiale Stauchung. Hierdurch kann eine Anfangsbetätigungsphase definiert werden, die der ersten Betätigungsphase vorgelagert ist. Während dieser Anfangsbetätigungsphase kann eine Verlagerung des Kolbens überwiegend oder im Wesentlichen ausschließlich mit einer Deformation des Zwischenrückstellelement einhergehen. Das erste und/oder das zweite Rückstellelement können hingegen nur geringfügig deformiert werden oder im Wesentlichen deformationsfrei bleiben.

Diese Anfangsbetätigungsphase kann sich das Bewegen des Kolbens über eine vorbestimmte Verlagerungsstrecke umfassen, wobei dies insbesondere ein Bewegen des Kolbens aus einer Ausgangsstellung betreffen kann. Die Verlagerungsstrecke während der Anfangsbetätigungsphase kann die Verlagerungsstrecken während der ersten und/oder zweiten Betätigungsphase unterschreiten. Insbesondere kann die Verlagerungsstrecke während der Anfangsbetätigungsphase nicht mehr als ein Zehntel, nicht mehr als ein Viertel oder nicht mehr als die Hälfte der Verlagerungsstrecken während der ersten und/oder zweiten Betätigungsphase umfassen.

Zusammengefasst kann über das Zwischenrückstellelement somit eine Anfangsbetätigungsphase definiert werden, in der die von der Pedalsimulationsvorrichtung erzeugten Rückstellkräfte überwiegend oder im Wesentlichen ausschließlich durch das Zwischenrückstellelement bereitgestellt werden. Ein Verlauf der Simulationskennlinie während dieser Betätigungsphase kann somit im Wesentlichen durch das Zwischenrückstellelement definiert werden. Aufgrund des geringeren Deformationswiderstandes kann die Anfangsbetätigungsphase jedoch vergleichsweise rasch überwunden werden, woraufhin sich die erste Betätigungsphase mit im Vergleich größeren besondere progressiven Rückstellkraft anschließen kann. Über die Anfangsbetätigungsphase kann allgemein das sogenannte Einsprungverhalten der Pedalsimulationsvorrichtung definiert werden. Dieses kann beispielsweise darüber bestimmen, wie rasch ein Fahrer nach einer Bremspedalbetätigung eine deutliche haptische Rückmeldung erfährt. Diese deutliche haptische Rückmeldung kann spätestens bei Erreichen der ersten Betätigungsphase und/oder einen zumindest teilweisem Durchlaufen der ersten Betätigungsphase bereitgestellt werden.

Die Zwischenkopplungseinheit ist ferner derart angeordnet, dass sie zumindest infolge einer Bremspedalbetätigung in Anlage mit der Kopplungseinheit und/oder mit dem Anschlagbereich bringbar ist, zum Beispiel unter Überwindung eines anfänglichen axialen Spiels hierzwischen. Zusätzlich oder alternativ kann die Zwischenkopplungseinheit derart angeordnet sein, dass sich das Zwischenrückstellelement an dem Kolben abstützt und/oder damit in Anlage steht oder in Anlage bringbar ist.

Zum Beispiel sieht eine Variante vor, dass die Zwischenkopplungseinheit nahe der Kopplungseinheit angeordnet und in Folge einer Kolbenverlagerung in die Betätigungsrichtung sowie unter Deformation des Zwischenrückstellelement in Anlage mit der Kopplungseinheit bringbar ist. Das Zwischenrückstellelement kann dabei zumindest abschnittsweise axial zwischen der Kopplungseinheit und der Zwischenkopplungseinheit angeordnet sein. Spätestens nach Durchlaufen der Anfangsbetätigungsphase kann die Zwischenkopplungseinheit sich im Wesentlichen starr an der Kopplungseinheit abstützen und/oder hiermit in Anlage gelangen.

Eine weitere Variante sieht vor, dass die Zwischenkopplungseinheit zumindest abschnittsweise axial zwischen dem zweiten Rückstellelement und einer dem zweiten Rückstellelement zugewandten Fläche des Kolbens angeordnet ist. Bei dieser Fläche kann es sich um eine Bodenfläche eines hohlzylindrischen Abschnitts des Kolbens handeln. In diesem Zusammenhang kann sich das Zwischenrückstellelement zumindest abschnittsweise zwischen der entsprechenden Fläche des Kolbens und einem Anlageabschnitt der Zwischenkopplungseinheit erstrecken. An einer von dem Zwischenrückstellelement abgewandten Seite des Anlageabschnitts kann sich das zweite Rückstellelement abstützen oder daran anliegen. Spätestens nach Durchlaufen der Anfangsbetätigungsphase kann sich die Zwischenkopplungseinheit im Wesentlichen starr an dem Kolben abstützen und/oder hiermit in Anlage gelangen.

Insbesondere bei der letztgenannten Variante, bei der die Zwischenkopplungseinheit nahe dem Kolben angeordnet ist und optional damit in Anlage gelangt, kann ferner vorgesehen sein, dass die Zwischenkopplungseinheit dazu ausgebildet ist, sich derart an dem Anschlagbereich abzustützen, dass eine weitere Verlagerung der Zwischenkopplungseinheit in die Betätigungsrichtung unterbunden ist. Dies kann insbesondere nach Durchlaufen der Anfangsbetätigungsphase und, optional, zumindest eines Teils der ersten oder der zweiten Betätigungsphase erfolgen.

In diesem Zusammenhang kann der Anschlagbereich einen Nebenanschlagsbereich umfassen, der dazu ausgebildet ist, mit der Zwischenkopplungseinheit zu wechselwirken und insbesondere hiermit in Anlage zu gelangen. Der Nebenanschlagsbereich kann sich von dem Anschlagbereich und insbesondere einer mit der Kopplungseinheit wechselwirkenden Anschlagfläche axial in Richtung des Kolbens erstrecken. Mit anderen Worten kann der Nebenanschlagsbereich über die mit der Kopplungseinheit wechselwirkende Anschlagfläche axial in Richtung des Kolbens hervorstehen. Dabei kann er sich im Wesentlichen entlang der Verlagerungsachse erstrecken und diese auch zumindest abschnittsweise aufnehmen. Gemäß einer Variante umfasst der Nebenanschlagsbereich einen Bolzen, der, optional, an der mit der Kopplungseinheit wechselnden Anschlagfläche befestigt ist, zum Beispiel über eine Schraubverbindung.

Die Zwischenkopplungseinheit kann ferner einen Bereich umfassen, mit dem sie in Anlage mit dem Nebenanschlagbereich bringbar ist. Dieser Bereich kann ein Dämpfungselement umfassen, zum Beispiel ein gummielastisch deformierbares Element. Die Zwischenkopplungseinheit und der Nebenanschlagbereich können in einer Ausgangsstellung der Pedalsimulationsvorrichtung einen definierten axialen Abstand zueinander aufweisen oder, anders ausgedrückt, um ein definiertes axiales Spiel voneinander beabstandet sein. Die Größe dieses Abstandes bestimmt den Zeitpunkt (und den Verlagerungsweg des Kolbens), ab dem der Anschlag zwischen dem Kontaktbereich und dem Nebenanschlagbereich herstellbar ist. Gemäß einer Variante erfolgt dieser Anschlag erst nach Durchlaufen der ersten Betätigungsphase und vorzugsweise auch erst nach einem zumindest teilweisen Durchlaufen der zweiten Betätigungsphase. Insbesondere kann vorgesehen sein, dass dieser Anschlag erst zum Abschluss einer Betätigung der Pedalsimulationsvorrichtung hergestellt wird, bei der das zweite Rückstellelement bereits um ein vorbestimmtes Maß definiert wurde. Ist zusätzlich das Dämpfungselement vorgesehen, kann dem Fahrer somit ein gedämpfter Abschluss des Bremsvorgangs suggeriert werden.

Abschließend ist darauf hinzuweisen, dass die Erfindung auch eine Pedalsimulationsvorrichtung gemäß den vorstehenden Varianten vorsehen kann, bei der das erste und zweite Rückstellelement jedoch beliebige Federkennlinien aufweisen. Mit anderen Worten ist gemäß der vorliegenden Erfindung auch eine Pedalsimulationsvorrichtung vorgesehen, umfassend: ein Gehäuse; einen Anschlagbereich, der im Wesentlichen starr mit dem Gehäuse gekoppelt ist; einen Kolben, der in dem Gehäuse aufgenommen unter Durchlaufen aufeinanderfolgender erster und zweiter Betätigungsphasen in eine Betätigungsrichtung verlagerbar ist; eine Rückstellvorrichtung, die dazu ausgebildet ist, eine Rückstellkraft auf den Kolben auszuüben, die entgegen dessen in die Betätigungsrichtung erfolgende Verlagerung wirkt; wobei die Rückstellvorrichtung folgendes umfasst: ein erstes elastisch deformierbares Rückstellelement, ein zweites elastisch deformierbares Rückstellelement, und eine Kopplungseinheit, wobei das erste und das zweite Rückstellelement dazu ausgebildet sind, sich zumindest infolge einer Bremspedalbetätigung über die Kopplungseinheit aneinander abstützen, wobei die Kopplungseinheit während der ersten Betätigungsphase des Kolbens unter einer Deformation von überwiegend oder im Wesentlichen ausschließlich dem ersten Rückstellelement verlagerbar ist, wobei die Kopplungseinheit nach dem Durchlaufen der ersten Betätigungsphase dazu ausgebildet ist, sich an dem Anschlagbereich derart abzustützen, dass eine weitere Verlagerung in die Betätigungsrichtung unterbunden ist, und wobei der Kolben bei Durchlaufen der zweiten Betätigungsphase dazu ausgebildet ist, unter einer Deformation von überwiegend oder im Wesentlichen ausschließlich dem zweiten Rückstellelement weiter in die Betätigungsrichtung verlagert zu werden. Es versteht sich, dass diese weitere Variante mit sämtlichen der vorstehend und nachfolgend erläuterten Aspekte und Weiterbildungen der Pedalsimulationsvorrichtung kombinierbar ist.

Die Erfindung betrifft ferner eine Kraftfahrzeugbremsanlage, umfassend eine Pedalsimulationsvorrichtung gemäß einem der vorstehend oder nachstehend erläuterten Aspekte. Insbesondere kann in diesem Fall vorgesehen sein, dass die Kraftfahrzeugbremsanlagen ein Bremspedal umfasst, das mit der Pedalsimulationsvorrichtung hydraulisch gekoppelt ist.

Die Erfindung betrifft ferner ein Verfahren zum Bereitstellen einer haptischen Rückmeldung bei einer Bremspedalbetätigung, insbesondere unter Verwendung einer Pedalsimulationsvorrichtung nach einem der vorangehenden oder nachstehenden Aspekte. Dabei umfasst das Verfahren die folgenden Schritte:
a) Verlagern eines Kolbens, der sich über eine Zwischenkopplungseinheit an einer Kopplungseinheit abstützt, in eine Betätigungsrichtung unter überwiegender oder im Wesentlichen ausschließlicher Deformation eines ersten elastisch deformierbaren Rückstellelements;
b) Verlagern einer Kopplungseinheit in die Betätigungsrichtung nach Maßgabe der Kolbenverlagerung;
c) nach Zurücklegen einer vorbestimmten Verlagerungsstrecke, Herstellen einer abstützenden Wechselwirkung zwischen der Kopplungseinheit und einem Anschlagbereich, derart, dass ein weiteres Verlagern der Kopplungseinheit in die Betätigungsrichtung unterbunden ist; und anschließend
d) weiteres Verlagern des Kolbens in die Betätigungsrichtung unter überwiegender oder im Wesentlichen ausschließlicher Deformation eines zweiten elastisch deformierbaren Rückstellelements, das sich an der Zwischenkopplungseinheit abstützt.

Dabei weist das erste Rückstellelement eine im Wesentlichen nichtlineare Federkennlinie auf und das zweite Rückstellelement weist eine im Wesentlichen lineare Federkennlinie auf. Die Zwischenkopplungseinheit wird bei dem erfindungsgemäßen Verfahren infolge der Bremspedalbetätigung in Anlage mit der Kopplungseinheit und/oder mit dem Anschlagbereich gebracht.

Die Schritte a) und b) können zumindest teilweise parallel ausgeführt werden. Die Verlagerungsstrecke in Schritt c) kann sich auf eine Verlagerungsstrecke des Kolbens und/oder der Kopplungseinheit beziehen, insbesondere aus einer Ausgangsstellung des Kolbens und/oder der Kopplungseinheit heraus sowie vorzugsweise entlang der Verlagerungsachse. Die abstützende Wechselwirkung kann ein in Anlage bringen von Kopplungseinheit und Anschlagbereich einschließen. In Schritt d) kann eine weitere elastische Deformation des ersten Rückstellelements daraufhin unterbunden sein. Es versteht sich, dass sie Schritte a) und b) die vorstehend erläuterte erste Betätigungsphase bilden können. Der Schritt d) kann hingegen die vorstehend erläuterte zweite Betätigungsphase definieren.

Allgemein kann das Verfahren jegliche weitere Schritte oder Merkmale umfassen, um sämtliche der vorstehend oder nachstehend erläuterten Wirkungen und/oder Wechselwirkungen zu erzielen. Insbesondere kann zusätzlich eine Anfangsbetätigungsphase vorgesehen sein, in der eine Zwischenkopplungseinheit verlagert und/oder ein Zwischenrückstellelement in der vorstehend erläuterten Weise deformiert wird. Ebenso kann das Verfahren einen Schritt des hydraulischen Koppelns eines Bremspedals mit einer Pedalsimulationsvorrichtung umfassen, mittels derer die Schritte a)-d) ausgeführt werden. Zusätzlich oder alternativ kann ein Schritt des Einleitens eines nach Maßgabe einer Bremspedalbetätigung verschobenen Hydraulikfluidvolumens in einer von dem Kolben begrenzte Druckkammer vorgesehen sein. Weiterhin kann ein Schritt des hydraulischen Abkoppelns des Bremspedals von den Radbremsen einer Kraftfahrzeugbremsanlage vorgesehen sein.

### Kurze Beschreibung der Figuren

Weitere Vorteile, Einzelheiten und Merkmale der hier beschriebenen Lösung ergeben sich aus der nachfolgenden Beschreibung von Beispielen sowie aus den Figuren. Es zeigen:
- Fig. 1: eine schematische Gesamtansicht einer Kraftfahrzeugbremsanlage, umfassend eine Pedalsimulationsvorrichtung gemäß einem Ausführungsbeispiel;
- Fig. 2: ein nicht erfindungsgemäßes Beispiel einer Pedalsimulationsvorrichtung, welches das Verständnis der Erfindung erleichtert;
- Fig. 3: eine Pedalsimulationsvorrichtung gemäß einem ersten Ausführungsbeispiel in einer die Verlagerungsachse enthaltenden Schnittansicht;
- Fig. 4: eine Pedalsimulationsvorrichtung gemäß einem zweiten Ausführungsbeispiel in einer die Verlagerungsachse enthaltenden Schnittansicht;
- Fig. 5: eine beispielhafte Simulationskennlinie der Pedalsimulationsvorrichtung gemäß des in Figur 4 gezeigten zweiten Ausführungsbeispiels;
- Fig. 6: eine Pedalsimulationsvorrichtung gemäß einem dritten Ausführungsbeispiel in einer die Verlagerungsachse enthaltenden Schnittansicht;
- Fig. 7: ein Dämpfungselement des in Figur 6 gezeigten dritten Ausführungsbeispiels; und
- Fig. 8: ein Rückstellelement des in Figur 6 gezeigten dritten Ausführungsbeispiels.

### Detaillierte Beschreibung

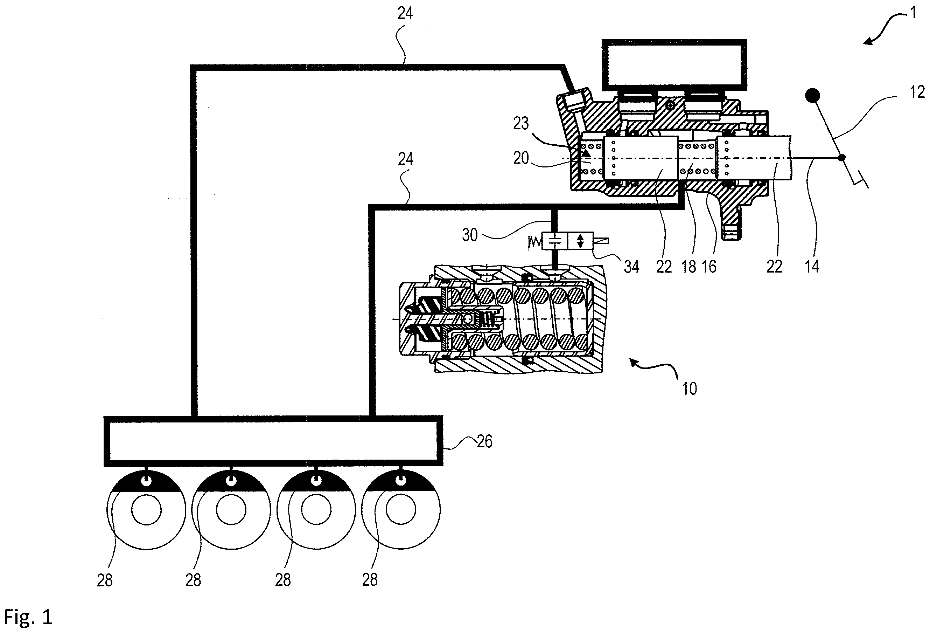

Figur 1 zeigt eine schematische Gesamtansicht einer Kraftfahrzeugbremsanlage 1, umfassend eine Pedalsimulationsvorrichtung 10 gemäß einem Ausführungsbeispiel. Genauer gesagt handelt es sich bei der Pedalsimulationsvorrichtung 10 um das nachfolgend erläuterte erste Ausführungsbeispiel.

Die Kraftfahrzeugbremsanlage 1 ist nach allgemein bekannten Prinzipien aufgebaut und wird daher nur kurz erläutert. Die vorliegende Offenbarung richtet sich hingegen maßgeblich auf den Aufbau und die Funktionsweise der Pedalsimulationsvorrichtung 10.

Die Kraftfahrzeugbremsanlage 1 umfasst ein vom Fahrer betätigtes Bremspedal 12. Dieses ist über Krafteingangsglied 14 mit einem Hauptbremszylinder 16 gekoppelt. Der Hauptbremszylinder 16 umfasst eine erste Druckkammer 18 und eine zweite Druckkammer 20. Die Druckkammern 18, 20 werden von jeweils einem Bremskolben 22 begrenzt, die in einer Zylinderbohrung 23 des Hauptbremszylinders 16 nach Maßgabe einer Bremspedalbetätigung verlagerbar sind. Konkret werden die Kolben 22 bei einer Bremspedalbetätigung in Figur 1 nach links verschoben, sodass sich das Volumen der jeweiligen Druckkammern 18, 20 verkleinert. Daraufhin wird ein Hydraulikdruck aufgebaut, der über die Leitungen 24 auf eine schematisch dargestellte Ventilbaugruppe 26 einwirkt. In bekannter Weise sind die Leitungen 24 dabei jeweils einer der Druckkammern 18, 20 zugeordnet, um zwei fluidisch entkoppelte Bremskreise der Kraftfahrzeugbremsanlage 1 mit Hydraulikdruck zu versorgen.

Die Ventilbaugruppe 26 kann als eine herkömmliche Ventilbaugruppe eines Schlupfregelsystems ausgebildet sein. Die Ventilbaugruppe 26 ist den schematisch dargestellten Radbremsen 28 vorgeschaltet und kann diese einzeln oder paarweise mit einer der Leitungen 24 hydraulisch koppeln. Folglich kann der vom Fahrer erzeugte Hydraulikdruck auf die Radbremsen 28 einwirken und dort in üblicher Weise Bremskräfte erzeugen. Im vorliegenden Fall ist die Kraftfahrzeugbremsanlage 1 jedoch nach einem sogenannten "Brake-By-Wire"-Prinzip aufgebaut. Demnach ist vorgesehen, dass zumindest im Normalbetrieb ein vom Fahrer erzeugter Hydraulikdruck nicht unmittelbar auf die Radbremsen 28 einwirkt. Stattdessen wird eine Bremspedalbetätigung sensorisch erfasst und an eine von der Ventilbaugruppe 26 umfasste Druckerzeugungseinheit übermittelt (nicht dargestellt). In Abhängigkeit des Ausmaßes der Bremspedalbetätigung (also zum Beispiel dem Betätigungsweg und/oder der Betätigungsgeschwindigkeit des Bremspedals 12) erzeugt die Druckerzeugungseinrichtung der Ventilbaugruppe 26 korrespondierende Bremsdrücke an den Radbremsen 28. Um dem Fahrer dennoch eine haptische Rückmeldung über den Bremsvorgang geben zu können, ist die Pedalsimulationsvorrichtung 10 vorgesehen, die mit einer der Leitungen 24 hydraulisch gekoppelt ist. Diese hydraulische Kopplung erfolgt über eine Abzweigung 30, die von einer der Leitungen 24 zu einer Einlassöffnung 32 der Pedalsimulationsvorrichtung 10 führt. In der Abzweigung 30 ist ferner ein Umschaltventil 34 vorgesehen, das vorzugsweise elektromechanisch betätigbar ist. Im regulären "Brake-By-Wire"-Modus, bei dem keine direkte hydraulische Kopplung des Bremspedals 12 und der Radbremsen 28 vorgesehen ist, nimmt dieses Umschaltventil 34 einen geöffneten Zustand ein. Folglich wird das über entsprechende Leitung 24 transportierte Hydraulikfluid primär in die Pedalsimulationsvorrichtung 10 eingeleitet. In der nachstehend erläuterten Weise kann die Pedalsimulationsvorrichtung 10 daraufhin Rückstellkräfte erzeugen, die dem Fahrer 12 ein tatsächliches Wechselwirken mit den Radbremsen 28 suggerieren.

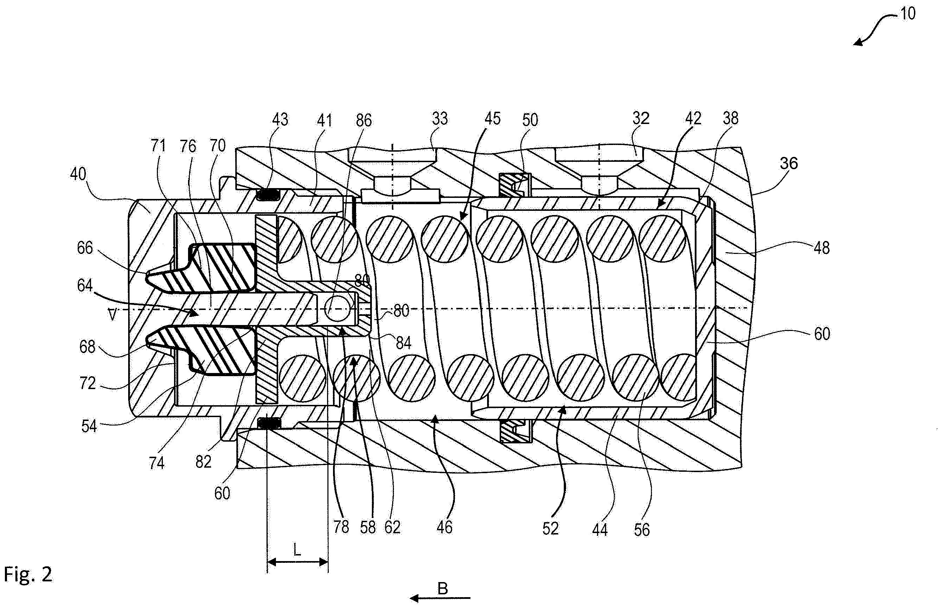

Figur 2 zeigt eine Pedalsimulationsvorrichtung 10 gemäß einem nicht erfindungsgemäßen Beispiel, welches angegeben ist, da es das Verständnis der Erfindung erleichtert. Man erkennt, dass die Pedalsimulationsvorrichtung 10 ein Gehäuse 36 umfasst, in der die vorstehend erläuterte Einlassöffnung 32 ausgebildet ist, um eine hydraulische Kopplung mit dem Bremspedal 12 zu ermöglichen. Das Gehäuse 36 umfasst eine hohlzylindrische Ausnehmung 38 (oder auch Zylinderbohrung), die sich im Wesentlichen konzentrisch um die nachfolgend erläuterte Verlagerungsachse V erstreckt. Die hohlzylindrische Ausnehmung 38 ist nach außen über eine in die Ausnehmung 38 eingesetzte Deckelanordnung 40 verschlossen und insbesondere fluidisch abgedichtet. Genauer gesagt definieren die hohlzylindrische Ausnehmung 38 und die Deckelanordnung 40 einen geschlossenen Hohlraum des Gehäuses 36. Dieser ist in eine Druckkammer 42 und einen Aufnahmeraum 45 für eine nachfolgend erläuterte Rückstellvorrichtung 46 unterteilt. Die Druckkammer 42 wird von einer Bodenfläche 48 (oder, anders ausgedrückt, von einem Bodenbereich 48) der hohlzylindrischen Ausnehmung 38 begrenzt. Die Bodenfläche 48 bildet einen ersten axialen Endbereich der hohlzylindrischen Ausnehmung 38, wohingegen die Deckelanordnung 40 einen der Bodenfläche 48 gegenüberliegenden zweiten axialen Endbereich des vom Gehäuse 36 begrenzten Hohlraums bildet.

Die Druckkammer 42 wird ferner durch einen verlagerbar in der hohlzylindrischen Ausnehmung 38 aufgenommenen Kolben 44 begrenzt. Der Kolben 44 ist ebenfalls hohlzylindrisch ausgebildet und erstreckt sich konzentrisch um die Verlagerungsachse V. In der in Figur 2 gezeigten Ausgangsstellung der Pedalsimulationsvorrichtung 10, bei dem keine Bremspedalbetätigung erfolgt ist und kein Fluid über die Einlassöffnung 32 eingeleitet wurde, liegt der Kolben 44 an der Bodenfläche 48 der Druckkammer 42 an. Ferner erkennt man in Figur 2, dass der Kolben 44 mit seiner Außenumfangsfläche an einer Dichtungsanordnung 50 anliegt, um die Druckkammer 42 fluidisch abzudichten.

Wie erwähnt, ist der Kolben 44 hohlzylindrisch ausgebildet und umfasst eine sich konzentrisch zu sowie entlang der Verlagerungsachse V erstreckende Zylinderbohrung 52. Diese begrenzt gemeinsam mit der Deckelanordnung 40 den Aufnahmeraum 45 für die Rückstellvorrichtung 46. Die Rückstellvorrichtung 46 umfasst ein erstes Rückstellelement 54, das als Gummifederelement ausgebildet ist, sowie ein zweites Rückstelleelement 56, das als metallische Spiralfeder ausgebildet ist. Diese sind durch eine Kopplungseinheit 58 räumlich voneinander getrennt, insbesondere derart, dass sich die Rückstellelemente 54, 56 nicht direkt kontaktieren. Allerdings stützen sich beide Rückstellelemente 54, 56 an der Kopplungseinheit 58 ab und stehen somit in einer kraftleitenden Verbindung. Insgesamt sind die Rückstellelemente 54, 56 entlang der Verlagerungsachse V betrachtet in Serie angeordnet und sind in der nachfolgend erläuterten Weise im Wesentlichen aufeinanderfolgend deformierbar.

Ein erstes axiales Ende des zweiten Rückstellelements 56 ist in der Zylinderbohrung 52 des Kolbens 44 aufgenommen und liegt an einer Bodenwand 60 hiervon an. Ein zweites axiales Ende, das der Deckelanordnung 40 zugewandt ist, ist hingegen der Kopplungseinheit 58 zugewandt und liegt an dieser an. Konkret umfasst die Kopplungseinheit 58 einen Anlageabschnitt 60, der teller- oder scheibenförmig ausgebildet ist und die Verlagerungsachse V mittig aufnimmt. Der Anlageabschnitt 60 bildet somit ein plattenförmiges und im gezeigten Fall rundes Element, das sich im Wesentlichen radial zu der Verlagerungsachse V erstreckt. Ferner umfasst die Kopplungseinheit 58 einen nachfolgend erläuterten Aufnahmeabschnitt 62, der mit einem Anschlagbereich 64 der Deckelanordnung 40 wechselwirkt.

Der Anlageabschnitt 60 umfasst eine erste Seite, die dem zweiten Rückstellelement 56 zugewandt ist und mit diesem in Anlage steht. Eine hiervon abgewandte Seite des Anlageabschnitts 60 ist einer Bodenfläche 66 der Deckelanordnung 40 zugewandt, wobei diese Bodenfläche 66 der Bodenfläche 48 der hohlzylindrischen Ausnehmung 38 gegenüberliegt. In dem von der Bodenfläche 66 und dem Anlageabschnitt 60 begrenzten axialen Zwischenraum ist das erste Rückstelleelement 54 aufgenommen. Dieses liegt sowohl an dem Anlageabschnitt 60 wie auch an der Bodenfläche 66 an.

Bei dem gezeigten Beispiel ist das erste Rückstelleelement 54 allgemein mit einem geringeren Deformationswiderstand ausgebildet, als das zweite Rückstelleelement 56. Mit anderen Worten ist das erste Rückstellelement 54 im Vergleich zu dem zweiten Rückstellelement 56 als ein weiches Federelement ausgebildet, wohingegen das zweite Rückstelleelement 56 als ein im Vergleich hartes Federelement ausgebildet ist. Das erste Rückstellelement 54 umfasst ferner zwei Deformationsabschnitte 68, 70, die wiederum unterschiedliche Deformationswiderstände aufweisen. Konkret ist ein in der gezeigten Ausgangsstellung der Bodenfläche 66 unmittelbar zugewandter und mit dieser in Eingriff stehender erster Deformationsabschnitt 68 vorgesehen, der einen vergleichsweise geringen Deformationswiderstand aufweist, also als ein weicher Federabschnitt ausgebildet ist. Der erste Deformationsabschnitt 68 ist ferner teilweise in einer Ausnehmung 72 in der Bodenfläche 66 aufgenommen. Man erkennt, dass dabei eine Übermaßpassung vorliegt und die Ausnehmung 72 in der gezeigten Ausgangsstellung noch einen ausreichenden Freiraum bereitstellt, um den Deformationsabschnitt 68 in Folge einer Deformation und insbesondere eines radialen nach außen Drängens aufzunehmen.

Der zweite Deformationsabschnitt 70 ist im Vergleich zum ersten Deformationsabschnitt 68 mit einem größeren Deformationswiderstand sowie einem größeren Durchmesser. Er bildet ferner einen im Vergleich zum ersten Deformationsabschnitt 68 härteren Federabschnitt. In der gezeigten Ausgangsstellung ist er ferner von der Bodenfläche 66 axial beabstandet. Insgesamt sind die Deformationswiderstände der Deformationsabschnitte 68, 70 derart gewählt, dass sich das vorstehend geschilderte Verhältnis der Deformationswiderstände zwischen dem ersten und dem zweiten Rückstelleelement 54, 56 einstellt.

Ferner erkennt man in Figur 2 den bereits erwähnten Anschlagbereich 64, der sich radial mittig von der Bodenfläche 66 entlang der Verlagerungsachse V in Richtung des Kolbens 44 erstreckt. Dabei ist der Anschlagbereich 64 als ein zylindrischer, stiftartiger sowie hervorspringender Bereich ausgebildet, der einen gerundeten Querschnitt aufweist. Eine Außenumfangsfläche des Anschlagbereichs 64 definiert einen Führungsbereich 74. Man erkennt, dass das erste Rückstelleelement 54 eine zentrale Bohrung 76 aufweist, mit der es auf den Führungsbereich 74 aufgeschoben ist. Der Führungsbereich 74 sichert somit eine radiale Position des ersten Rückstellelements 54. Ferner erkennt man, dass auch die Kopplungseinheit 58 an dem Führungsbereich 74 angeordnet ist und, genauer gesagt, über den Aufnahmebereich 62 darauf aufgeschoben ist.

Im Detail ist der Aufnahmebereich 62 radial mittig an der Kopplungseinheit 58 ausgebildet und definiert einen sich im Wesentlichen axial entlang der Verlagerungsachse V erstreckenden hohlzylindrischen Bereich. Konkret erstreckt sich der Aufnahmebereich 62 in Richtung des Kolbens 44 und nimmt die Verlagerungsachse V dabei mittig auf. Dabei umfasst der Aufnahmebereich 62 eine Ausnehmung in Form einer sich ebenfalls entlang der Verlagerungsachse V erstreckenden Aufnahmebohrung 78. Diese ist in Richtung des ersten Rückstellelements 54 geöffnet. Ferner umfasst sie vergleichsweise klein dimensionierte Entlüftungsbohrungen 80. Weiterhin umfasst der Aufnahmebereich 62 eine dem ersten Rückstellelement 54 zugewandte Aufnahmeöffnung 82, in der der Anschlagbereich 64 bereits in der in Figur 2 gezeigten Ausgangsstellung abschnittsweise aufgenommen ist. Genauer gesagt stehen der Anschlagbereich 64 und die Kopplungseinheit 58 bereits in der unbetätigten Ausgangsstellung der Pedalsimulationsvorrichtung 10 in Eingriff miteinander und weisen dabei eine axiale Überlappungs- bzw. Eingriffslänge L auf. Dabei liegt ein Abschnitt des Führungsbereichs 74 des Anschlagsbereichs 64 an einer Innenumfangswand der Aufnahmebohrung 78 des Aufnahmebereichs 62 über die Eingriffslänge L an.

Allerdings ist in diesem Zustand noch eine Relativverlagerung von Kopplungseinheit 58 und Anschlagbereich 64 möglich und konkret ein Abgleiten der Kopplungseinheit 58 entlang des Führungsbereichs 74 in Richtung der Bodenfläche 66. Dies liegt darin begründet, dass eine Kontaktfläche 84, welche eine axiale Bodenfläche der Aufnahmebohrung 78 bildet, in der Ausgangsstellung noch mit einem axialen Abstand zu einer Anschlagfläche 86 des Anschlagbereichs 64 angeordnet ist. Anders ausgedrückt ist in der gezeigten Ausgangsstellung die Kopplungseinheit 58 zunächst mit einem am axialen Spiel an dem Anschlagbereich 64 angeordnet. Wie nachstehend erläutert, ist dieses axiale Spiel zwischen der Anschlagfläche 86 und der Kontaktfläche 84 jedoch bei einer Betätigung der Pedalsimulationsrichtung 10 überwindbar, sodass die entsprechenden Flächen 84, 86 in Anlage miteinander bringbar sind. Daraufhin wird eine derartige abstützende Wechselwirkung zwischen der Kopplungseinheit 58 und dem Anschlagbereich 64 aufgebaut, das eine weitere Relativverlagerung in Richtung der Bodenfläche 66 der Deckelanordnung 40 unterbunden ist.

Im Folgenden wird eine Betriebsweise der Pedalsimulationsvorrichtung 10 erläutert. Bei einer Bremspedalbetätigung wird ein hydraulischer Druck in der Druckkammer 42 aufgebaut, da ein Hydraulikfluid über die Einlassöffnung 32 eingeleitet wird. Der Kolben 44 bewegt sich daraufhin unter Vergrößerung des Volumens der Druckkammer 42 zu Lasten des Volumens des Aufnahmeraums 45 entlang der Verlagerungsachse V in Figur 2 nach links. Dies entspricht einer Bewegung in eine Betätigungsrichtung B. Aufgrund der unterschiedlichen Deformationswiderstände oder, anders ausgedrückt, Federkonstanten der Rückstellelemente 54, 56 geht dies mit unterschiedlichen Deformationen der Rückstellelemente 54, 56 einher. Konkret stützt sich der Kolben 44 während einer ersten Betätigungsphase, bei der er aus seiner in Figur 2 gezeigten Ausgangsstellung in die Betätigungsrichtung B verlagert wird, über das zweite Rückstellelement 56 an der Kopplungseinheit 58 ab. Die Kopplungseinheit 58 stützt sich über das zweite Rückstellelement 54 wiederum an der Bodenfläche 66 der Deckelanordnung 40 ab. Innerhalb dieses Kraftflusses weist das erste Rückstellelement 54 den geringsten Deformationswiderstand auf und erfährt somit die größte Deformation. Dies betrifft zunächst den ersten Deformationsabschnitt 68, der den geringsten Deformationswiderstand aufweist und folglich unter starker elastischer Deformation axial gestaucht wird. Folglich erfährt er eine radiale Aufweitung und wird weiter in die Ausnehmung 72 in der Bodenfläche 66 gedrängt. Gleichzeitig wird der in Figur 2 gezeigte anfängliche axiale Abstand zwischen dem zweiten Deformationsabschnitt 70 und der Bodenfläche 66 überwunden, sodass eine der Bodenfläche 66 zugewandte Stirnfläche 71 dieses Deformationsabschnitts 70 in Anlage mit der Bodenfläche 66 gelangt. Zu diesem Zeitpunkt hat der erste Deformationsabschnitt 68 bereits eine signifikante Deformation erfahren und kann aufgrund der räumlichen Begrenzung durch die Ausnehmung 72 nur noch geringfügig weiter deformiert werden. Wird der Kolben 44 weiter in die Betätigungsrichtung B verlagert, was mit einer weiteren Verlagerung der Kopplungseinheit 58 in die Betätigungsrichtung B einhergeht, wird daraufhin der zweite Deformationsabschnitt 70 des ersten Rückstellelements 54 deformiert und genauer gesagt axial gestaucht. Aufgrund des deutlich größeren Deformationswiderstands des zweiten Rückstellelements 56 erfährt dieses zu diesem Zeitpunkt aber nur eine vernachlässigbare axiale Stauchung.

Die Deformation des ersten Rückstellelements 54 wird solange fortgesetzt, bis das axiale Spiel zwischen dem Anschlagbereich 64 und der Kopplungseinheit 58 überwunden ist und die Anschlagfläche 86 mit der Kontaktfläche 84 in Anlage gerät. In diesem Fall wird ein Deformationszustand des ersten Rückstellelements 54 beibehalten und eine weitere Verlagerung der Kopplungseinheit 58 in die Betätigungsrichtung B ist unterbunden. Im Detail stützt sich die Kopplungseinheit 58 in diesem Zustand derart an den Anschlagbereich 64 ab, dass sie mechanisch starr mit der Deckelanordnung 40 gekoppelt ist. Zu betonen ist, dass die Deckelanordnung 40 selbst einen Bestandteil des Gehäuses 36 der Pedalsimulationsvorrichtung 10 bildet und über eine Schraubverbindung 41 mechanisch starr mit einem Hauptgehäuseabschnitt 43 des Gehäuses verbunden ist. Der Anschlagbereich 64 stellt somit einen mechanisch festen oder, anders ausgedrückt, mechanisch starren Anschlag insbesondere über seine Anschlagfläche 86 bereit.

Während dieser ersten Betätigungsphase, die sich durch ein Überwinden des axialen Spiels zwischen Kopplungseinheit 58 und Anschlagbereich 64 auszeichnet, wird maßgeblich das erste Rückstellelement 54 deformiert. Dies erfolgt ferner in Form der vorstehend geschilderten Abfolge einer Deformation des ersten vor dem zweiten Deformationsabschnitt 68, 70. Die von der Pedalsimulationsvorrichtung insgesamt bereitgestellten Rückstellkräfte, welche auch als Gegenkraftreaktion bezeichnet werden, weisen aufgrund der gummielastischen Eigenschaft des ersten Rückstellelements 54 dabei einen nicht-linearen Verlauf auf. Die Pedalsimulationsvorrichtung 10 zeichnet sich allgemein durch eine Simulationskennlinie auf, die den Verlauf der erzeugten Rückstellkräfte über den Verlagerungsweg des Kolbens 44 und/oder eines Bremspedalbetätigungsweges aufzeigt (oder auch eines sogenannten Pedalhubs). Während der ersten Betätigungsphase, bei der überwiegend das erste Rückstellelement 54 deformiert wird, weist diese Simulationskennlinie folglich ebenfalls einen nicht-linearen Verlauf auf. Aufgrund des geringen Deformationswiderstandes des ersten Rückstellelements 54 ist der Verlauf der Simulationskennlinie in diesem Bereich vergleichsweise flach und eine haptische Rückmeldung an den Fahrer fällt moderat aus. Über den ersten Deformationsabschnitt 68, der als erstes deformiert wird, wird ferner ein besonders geringer anfänglicher Deformationswiderstand bereitgestellt, der rasch überwunden wird. Anschließend folgt ein vergrößerter aber dennoch vergleichsweise sanfter Anstieg der erzeugten Rückstellkräfte in Folge einer Deformation des zweiten Deformationsabschnitts 70.

Über den ersten Deformationsabschnitt 68 kann folglich das sogenannte Einsprungverhalten eingestellt werden, worüber bestimmt wird, wie rasch der Fahrer eine signifikante haptische Rückmeldung erhält. Die Deformation des ersten Deformationsabschnitts 68 kann deshalb auch als eine Anfangsbetätigungsphase beschrieben werden, die der eigentlichen ersten Betätigungsphase der Pedalsimulationsvorrichtung 10 vorgelagert ist. In diesem Fall würde sich die erste Betätigungsphase folglich durch eine überwiegende Deformation des zweiten Deformationsabschnitts 70 auszeichnen. Die in dieser Phase erfasste Pedalbetätigung kann zudem in ein entsprechend rasches Erzeugen tatsächlicher Bremskräfte mittels der Druckerzeugungseinrichtung der Ventilbaugruppe 26 aus Fig. 1 umgesetzt werden. Im Vergleich zu dem nachstehend geschilderten Ausführungsbeispiel unterscheidet sich dies dahingehend, dass die Ausführungsbetätigungsphase und erste Betätigungsphase im Wesentlichen durch ein und dasselbe Rückstellelement 54 definiert werden, das jedoch in unterschiedliche Deformationsabschnitte 68, 70 unterteilt ist. Eine derartige Unterteilung des Rückstellelements 54 ist jedoch rein optional.

Wie geschildert ist die Deformation des ersten Rückstellelements 54 nach in Anlage bringen von Anschlagfläche 86 und Kontaktfläche 84 im Wesentlichen abgeschlossen. Wird der Kolben 44 daraufhin dennoch weiter in die Betätigungsrichtung B verlagert, beginnt die zweite Betätigungsphase, bei der überwiegend oder nahezu ausschließlich das zweite Rückstellelement 56 deformiert wird. In diesem Fall bildet die Kopplungseinheit 58 aufgrund der abstützenden Wechselwirkung mit dem Anschlagbereich 64 einen mechanisch starren Anschlag. Das zweite Rückstellelement 56 wird somit nach Maßgabe einer Kolbenverlagerung axial gestaucht und komprimiert. Da das zweite Rückstellelement 56 als eine metallische Spiralfeder ausgebildet ist, weist sie eine im Wesentlichen lineare Federkennlinie auf. Demnach zeichnet sich die Simulationskennlinie der Pedalsimulationsvorrichtung 10 während dieser zweiten Betätigungsphase ebenfalls durch einen linearen Verlauf aus. Da das zweite Rückstellelement 56 ferner einen deutlich größeren Deformationswiderstand als das erste Rückstellelement 54 aufweist, werden auch insgesamt größere Rückstellkräfte während dieser zweiten Betätigungsphase erzeugt und der Fahrer erhält eine deutlich stärker spürbare haptische Rückmeldung.

Während der vorstehend geschilderten Kolbenverlagerung kann Luft aus dem Aufnahmeraum 45 über eine Auslassöffnung 33 entweichen. Ist die Kolbenverlagerung abgeschlossen, können die elastischen Rückstellelemente 54, 56 den Kolben 44 wieder in dessen in Figur 2 gezeigte Ausgangsstellung zurückdrängen, wobei sich die Rückstellelemente 54, 56 entspannen und wieder ihre ursprüngliche Form annehmen.

Ein Vorteil des gezeigten Beispiels besteht zunächst darin, dass besonders präzise und klar abgrenzbare Bereiche der Simulationskennlinie definiert werden können. Dies gelingt dadurch, dass die in Serie wirkenden ersten und zweiten Rückstellelemente 54, 56 in den unterschiedlichen Betätigungsphasen in einem unterschiedlichen Ausmaß deformierbar sind und somit deren Einflüsse auf die Simulationskennlinie präzise festgelegt werden können. Somit kann je nach den Anforderungen eines konkreten Fahrzeugmodells eine individuelle Simulationskennlinie durch geeignetes Dimensionieren der Rückstellelemente 54, 56 eingestellt werden. Gemäß dem vorliegenden Beispiel ist ferner zunächst die nicht-lineare Federkennlinie durch Deformation des ersten Rückstellelements 54 bereitstellbar, die progressiv und vergleichsweise sanft ansteigt, um dem Fahrer zunächst nur eine geringe haptische Rückmeldung zu geben und eine sanfte Bremsbetätigung zu suggerieren. Erst anschließend werden die Rückstellkräfte maßgeblich von dem zweiten Rückstellelement 56 bereitgestellt, das eine deutlich stärker spürbare und vor allem linear zunehmende haptische Rückmeldung erzeugt. Somit wird ein unmittelbares Wechselwirken und insbesondere kontinuierliches Zunehmen der Bremsbetätigung suggeriert. Eine solche Definition der Simulationskennlinie vermittelt ein besonders natürliches Pedalgefühl für den Fahrer. Ferner ermöglicht die Kopplungseinheit 58 über deren mechanisch starres Abstützen an dem Anschlagbereich 64 eine besonders präzise Unterteilung der Simulationskennlinie, die über eine lange Betriebsdauer aufrechterhalten werden kann. Zudem wird das erste Rückstellelement 54 hierdurch von ein zu starken Deformation geschützt.

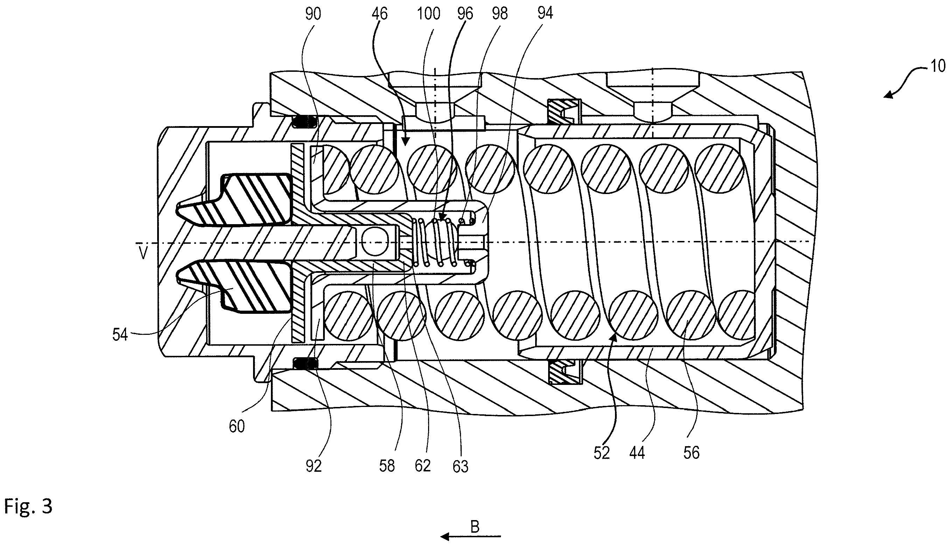

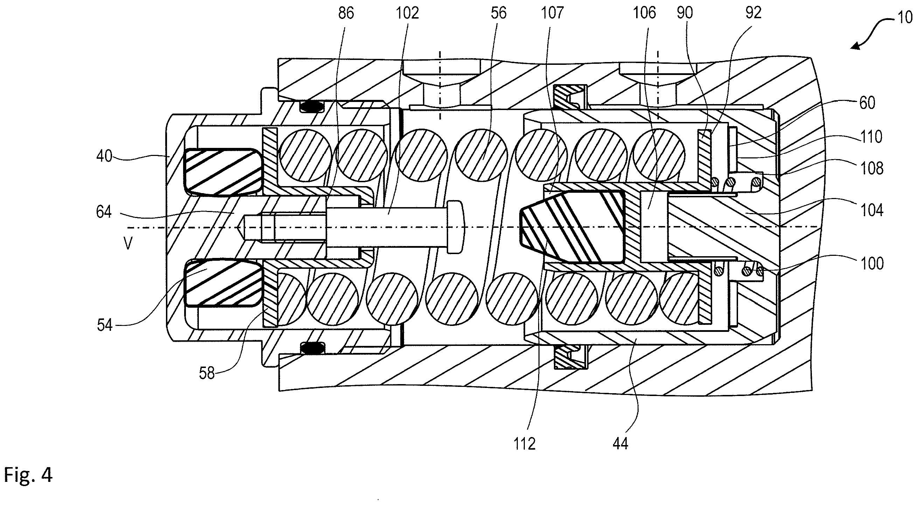

In den Figuren 3 und 4 werden Ausführungsbeispiele einer Pedalsimulationsvorrichtung 10 erläutert. Dabei werden im Wesentlichen nur diejenigen Komponenten erneut beschrieben, die sich von dem Beispiel gemäß Figur 2 unterscheiden. Gleichwirkende oder gleichartige Merkmale werden ferner mit den gleichen Bezugszeichen versehen.

In Figur 3 ist eine erste Ausführungsform gezeigt, die auf einem identischen Grundaufbau wie das Beispiel gemäß Figur 2 basiert. Allerdings umfasst die Rückstellvorrichtung 46 in diesem Fall eine zusätzliche Zwischenkopplungseinheit 90, um eine Anfangsbetätigungsphase und das vorstehend erläuterte sogenannte Einsprungverhalten besonders präzise einstellen zu können. Die Zwischenkopplungseinheit 90 ist analog zu der Kopplungseinheit 58 mit einem sich radial erstreckenden scheibenförmigen Anlageabschnitt 92 und einem hiervon axial in Richtung des Kolbens 44 hervorstehenden hohlzylindrischen Aufnahmebereich 94 ausgebildet. Der hohlzylindrische Aufnahmebereich 94 definiert wiederum eine Aufnahmebohrung 96. In dieser ist der Aufnahmebereich 62 der Kopplungseinheit 58 abschnittsweise aufgenommen. Mit anderen Worten ist die Zwischenkopplungseinheit 90 auf den Aufnahmebereich 62 um ein vorbestimmtes Maß aufgeschoben. Der Anlageabschnitt 92 der Zwischenkopplungseinheit 90 ist ferner dem Anlageabschnitt 60 der Kopplungseinheit 58 zugewandt. In der in Figur 3 gezeigten unbetätigten Ausgangsstellung der Pedalsimulationsvorrichtung 10 ist zwischen diesen Elementen ein axiales Spiel vorgesehen. An einer von dem Anlageabschnitt 60 der Kopplungseinheit 58 abgewandten Seite des Anlageabschnitts 92 der Zwischenkopplungseinheit 90 stützt sich das zweite Rückstellelement 56 ab. Das zweite Rückstellelement 56 ist somit zumindest abschnittsweise zwischen der Zwischenkopplungseinheit 90 und dem Kolben 44 angeordnet. Wird der Kolben 44 in der vorstehend erläuterten Weise in die Betätigungsrichtung B bewegt, drängt das zweite Rückstellelement 56 die Zwischenkopplungseinheit 90 somit in Richtung der Kopplungseinheit 58.

In Figur 3 erkennt man ferner, dass zwischen einem Bodenbereich der Zylinderbohrung 98 und einer Außenstirnfläche 63 des Aufnahmebereichs 62 zunächst ebenfalls ein axiales Spiel vorliegt. Ferner ist zwischen der Außenstirnfläche 63 und dem Bodenbereich 68 ein Zwischenrückstellelement 100 in Form einer metallischen Spiralfeder aufgenommen. Diese weist einen geringeren Deformationswiderstand auf als sämtliche der weiteren Rückstellelemente 54, 56, einschließlich der unterschiedlichen Deformationsabschnitte 68, 70 des ersten Rückstellelements 54.

Im Betrieb der Pedalsimulationsvorrichtung 10 bedeutet dies, dass der Kolben 44 bei einer Verlagerung aus einer Ausgangsstellung in die Betätigungsrichtung B zunächst die Zwischenkopplungseinheit 90 unter Deformation des Zwischenrückstellelements 100 ebenfalls in die Betätigungsrichtung B und relativ zu der Kopplungseinheit 58 bewegt. Die weiteren Rückstellelemente 54, 56 werden aufgrund ihrer deutlich größeren Deformationswiderstände im Vergleich zu dem Zwischenrückstellelement 100 lediglich geringfügig oder nahezu gar nicht deformiert. In dieser sogenannten Anfangsbetätigungsphase werden die Rückstellkräfte der Pedalsimulationsvorrichtung maßgeblich durch das Zwischenrückstellelement 100 festgelegt. Gleiches gilt für einen ersten Abschnitt der resultierenden Simulationskennlinie, die einen raschen linearen Anstieg zeigt. Sobald das axiale Spiel zwischen dem Anlageabschnitt 92 der Zwischenkopplungseinheit 90 und dem Anlageabschnitt 60 der Kopplungseinheit 58 überwunden ist, stützt sich der Kolben 44 unmittelbar sowie axial spielfrei an der Kopplungseinheit 58 ab. Daraufhin beginnt die erste Betätigungsphase, in der maßgeblich das erste Rückstellelement 54 deformiert wird, und anschließend die zweite Betätigungsphase, die maßgeblich mit einer Deformation des zweiten Rückstelleelements 56 einhergeht. Die entsprechenden Vorgänge sowie die dabei erzeugten Rückstellkräfte entsprechen denjenigen, wie anhand von Figur 2 erläutert.

Das Zwischenrückstellelement 100 kann ferner den Vorteil bereitstellen, Bauteiltoleranzen oder temperaturbedingte Abmaßänderungen von insbesondere dem ersten Rückstellelement 54 auszugleichen. Diese Faktoren beeinflussen im gezeigten Fall nämlich hauptsächlich den axialen Abstand von Kopplungseinheit 58 und Zwischenkopplungseinheit 92, der nur einen geringen Einfluss auf die Simulationskennlinie haben kann. Ferner kann das Zwischenrückstellelement 100 eine Vorspannung auf das erste Rückstellelement 54 ausüben, insbesondere derart, dass der Deformationsabschnitt 68 zuverlässig in der Ausnehmung 72 gehalten und hierdurch dessen Verschleiß reduziert werden kann (siehe Figur 2).

Zu betonen ist, dass das Ausbilden des ersten Rückstellelements 54 mit unterschiedlichen Deformationsabständen 68, 70 in dem Beispiel der Figur 2 und dem Ausführungsbeispiel der Figur 3 rein optional ist und auch lediglich ein Deformationsabschnitt 68, 70 vorgesehen sein kann, insbesondere lediglich der zweite Deformationsabschnitt 70. Das erste Rückstellelement 54 wäre dann zum Beispiel im Wesentlichen blockförmig ausgebildet und die Ausnehmung 72 in der Bodenfläche 66 der Deckelanordnung 40 könnte entfallen (siehe Figur 2).

In Figur 4 ist ein zweites Ausführungsbeispiel gezeigt, das auf dem Prinzip des Ausführungsbeispiels gemäß Figur 3 aufbaut, jedoch eine andere Form und Anordnung der Zwischenkopplungseinheit 90 vorsieht. Im Detail erkennt man, dass das erste Rückstellelement 54 blockförmig und somit nur mit lediglich einem Deformationsabschnitt ausgebildet ist. Ferner weist der Anschlagbereich 64 einen Nebenanschlagbereich 102 auf, der sich ausgehend von der Anschlagfläche 86, die in gewöhnlicher Weise mit der Kopplungseinheit 58 wechselwirkt, in Richtung des Kolbens 44 erstreckt. Der Nebenanschlagbereich 102 wird dabei von einem in den Anschlagbereich 64 eingeschraubten Bolzen gebildet, der sich entlang der Verlagerungsachse V erstreckt und konzentrisch in dem zweiten Rückstellelement 56 aufgenommen ist. Die Zwischenkopplungseinheit 90 ist hingegen in der hohlzylindrischen Ausnehmung 52 des Kolbens 44 aufgenommen. Dabei nimmt sie einen Führungsvorsprung 104 des Kolbens, der sich von der Bodenfläche 60 des Kolbens 44 aus in Richtung der Deckelanordnung 40 erstreckt, in einer zentralen Ausnehmung 106 auf. Die Kopplungseinheit 90 ist auf dem Führungsvorsprung entlang der Verlagerungsachse V verlagerbar geführt.

In der in Figur 4 gezeigten Ausgangsstellung ist die Zwischenkopplungseinheit 90 und insbesondere ein Anlageabschnitt 92 hiervon zunächst in einem axialen Abstand, oder anders ausgedrückt, mit einem axialen Spiel zu der Bodenfläche 60 des Kolbens 44 angeordnet. Ferner ist zwischen dem Anlageabschnitt 92 und der Bodenfläche 60 erneut ein Zwischenrückstellelement 100 angeordnet, das den Führungsvorsprung 104 konzentrisch aufnimmt. Die Bodenfläche 60 weist einen gestuften Verlauf umfassend eine Ausnehmung 108 auf, die den Führungsvorsprung 104 sowie das Zwischenrückstellelement 100 aufnimmt. Ferner weist die Bodenfläche 60 einen Anlagebereich 110 auf, der wiederum eine gestufte Ausnehmung umfasst, um den Anlageabschnitt 92 der Zwischenkopplungseinheit 90 aufnehmen zu können. Schließlich weist die Zwischenkopplungseinheit 90 an ihrem dem Anschlagbereich 64 zugewandten axialen Ende ein Dämpfungselement 112 auf, das aus einem Gummimaterial hergestellt ist.

Im Betrieb wird der Kolben 44 analog zu der vorstehenden Weise aus seiner in Figur 4 gezeigten Ausgangsstellung in die Betätigungsrichtung B verlagert. Das Zwischenrückstellelement 100 ist erneut mit dem geringsten Deformationswiderstand sämtlicher Rückstellelemente 100, 54, 56 ausgebildet und wird somit während einer Anfangsbetätigungsphase zunächst überwiegend oder nahezu ausschließlich deformiert. Es definiert somit wiederum das Einsprungverhalten sowie die anfänglichen Rückstellkräfte der Pedalsimulationsvorrichtung 10 und den initialen Verlauf von dessen Simulationskennlinie. Unter Überwindung des anfänglichen axialen Spiels zwischen der Zwischenkopplungseinheit 90 und der Bodenfläche 60 des Kolbens 44 wird das Zwischenrückstellelement 100 um einen vorbestimmten Weg deformiert, bis der Anlageabschnitt 60 und der Anschlagbereich 110 des Kolbens 44 in eine mechanisch starre Anlage geraten. Eine weitere Deformation des Zwischenrückstellelements 100 wird somit unterbunden.

Bei einer weiteren Verlagerung des Kolbens 44 in die Betätigungsrichtung B beginnt dann anschließend die erste Betätigungsphase. Dabei wird in der vorstehend erläuterten Weise maßgeblich das erste Rückstellelement 54 deformiert, so dass sich eine nicht lineare, progressive Simulationskennlinie ergibt, die einen vergleichsweise sanften Anstieg aufweist. In der vorstehend erläuterten Weise wird die Deformation des ersten Rückstellelements 54 durch den mechanisch starren Anschlag der Kopplungseinheit 58 an dem Anschlagbereich 64 begrenzt. Anschließend erfolgt eine ausschließliche Deformation des zweiten Rückstellelements 56, woraufhin sich eine lineare Simulationskennlinie mit einem vergleichsweise steilen Anstieg einstellt.

Über das Dämpfungselement 112, das in einer zentralen Sacklochbohrung 107 der Zwischenkopplungseinheit 90 aufgenommen ist, kann ferner ein definierter Anschlag an den Nebenanschlagbereich 102 eingestellt werden. Der Zeitpunkt dieses Anschlags kann über den in Figur 4 gezeigten anfänglichen Abstand zwischen dem Nebenanschlagbereich 92 und einer Stirnfläche des Dämpfungselements 112 eingestellt werden. Dabei kann es sich insbesondere um einen abschließend gedämpften Anschlag handeln, der die Verlagerung des Kolbens 44 in die Bewegungsrichtung B nach obenhin begrenzt. Mit anderen Worten, kann vorgesehen sein, dass erst nach einer maximalen Deformation des Zwischenrückstellelements 100 und des ersten Rückstellelements 54 sowie einer signifikanten Deformation des zweiten Rückstellelements 56 der Anschlag zwischen dem Nebenanschlagbereich 102 und dem Dämpfungselement 112 hergestellt wird. Dies betrifft entsprechend einen Endbereich der Simulationskennlinie, der dem Fahrer das Erreichen einer maximalen Bremsbetätigung suggeriert.

Zu beachten ist, dass das Vorsehen des Nebenanschlagbereichs 102 und des Dämpfungselements 112 rein optional ist und die Ausführungsform gemäß Figur 4 auch ohne diese Elemente realisiert werden kann. Allerdings bietet das optionale Ergänzen dieser Merkmale den Vorteil, dass dem Fahrer zum Ende hin ein definierter und vor allem gedämpfter Abschluss des Bremsvorgangs suggeriert wird.

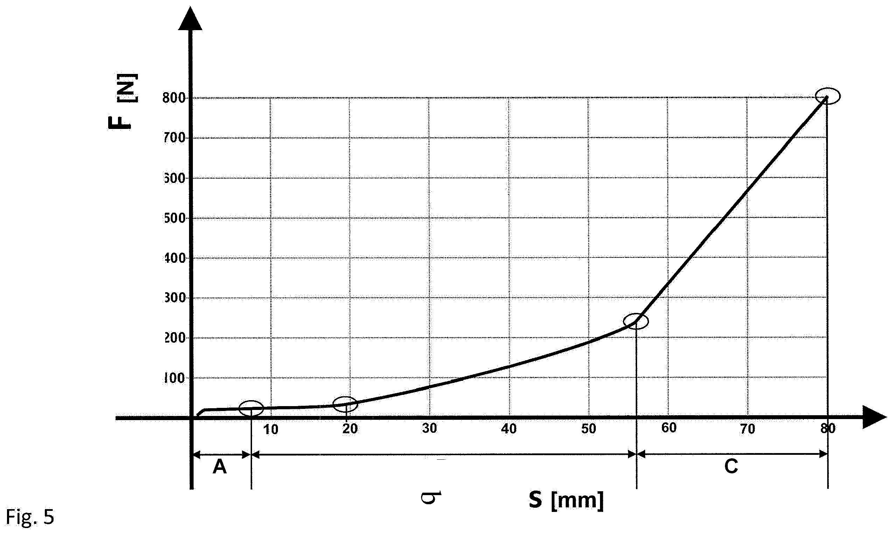

In Figur 5 ist eine mögliche Simulationskennlinie gezeigt, die sich auf das Beispiel gemäß Figur 3 bezieht. Dabei ist in bekannter Weise ein Verlauf der Rückstellkräfte F über einen Verlagerungsweg s des Bremspedals gezeigt (bzw. über einen sogenannten Pedalhub). Dieser Betätigungsweg s kann mit einem Verlagerungsweg des Kolbens 44 korrespondieren oder in diesen umgerechnet werden.

Man erkennt, dass zu Beginn der Pedalbetätigung zunächst ein sehr flach ansteigender linearer Bereich A durchlaufen wird. Dabei handelt es sich um die Anfangsbetätigungsphase, in der maßgeblich das Zwischenrückstellelement 100 deformiert wird. Anschließend beginnt die erste Betätigungsphase (Bereich b in Figur 5), die sich über einen vergleichsweise großen Betätigungsweg s des Bremspedals 12 erstreckt. In dieser Betätigungsphase wird maßgeblich das erste Rückstellelement 54 deformiert, das einen nichtlinearen progressiven Verlauf der Simulationskennlinie definiert. Dem Fahrer wird somit ein sanft ansteigender gleichmäßiger Bremsvorgang suggeriert. Sobald die Kopplungseinheit 58 in den mechanisch starren Anschlag mit dem Anschlagbereich 64 gelangt, beginnt die zweite Betätigungsphase (Bereich C in Figur 5), in der maßgeblich das zweite Rückstellelement 56 deformiert wird. Man erkennt, dass dies in einem deutlich stärkeren Anstieg der Simulationskennlinie verglichen zu den vorangehenden Betätigungsphasen resultiert. Der Verlauf dieses Anstiegs ist ferner linear, um dem Fahrer eine signifikante Bremsbetätigung unter Erzeugen gro-ßer Bremskräfte zu suggerieren.

Wie vorstehend erläutert, können optional ferner der Nebenanschlagbereich 102 sowie das Dämpfungselement 112 vorgesehen sein. Diese würden dazu führen, dass zum Ende der zweiten Betätigungsphase im Bereich C die Simulationskennlinie wiederum nicht linear verläuft und insbesondere degressiv abflacht. Dies würde jedoch nur einen vergleichsweise geringen Pedalbetätigungsweg s von wenigen Millimetern betreffen.

Insgesamt erkennt man, dass die erste Betätigungsphase einen Pedalbetätigungsweg s von insgesamt ca. 50 mm einschließt, wohingegen die zweite Betätigungsphase einen Pedalbetätigungsweg s von insgesamt ca. 15 mm einschließt. Die Anfangsbetätigungsphase umfasst hingegen lediglich einen Pedalbetätigungsweg von zwischen 5 mm und 10 mm.

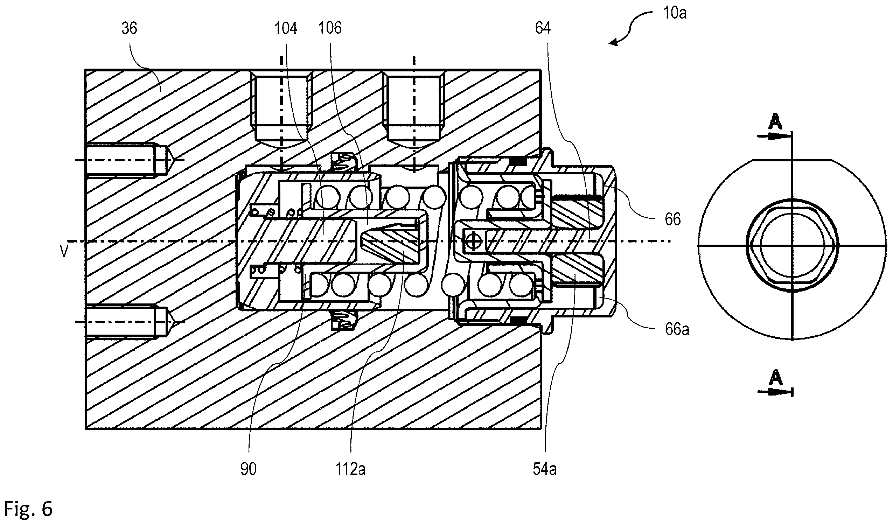

In Figur 6 ist ein drittes Ausführungsbeispiel einer alternativen Pedalsimulationsvorrichtung 10a gezeigt, die auf dem Prinzip des zweiten Ausführungsbeispiels gemäß Figur 4 aufbaut und im Wesentlichen eine zu der Darstellung in Figur 4 horizontal gespiegelte Anordnung zeigt.

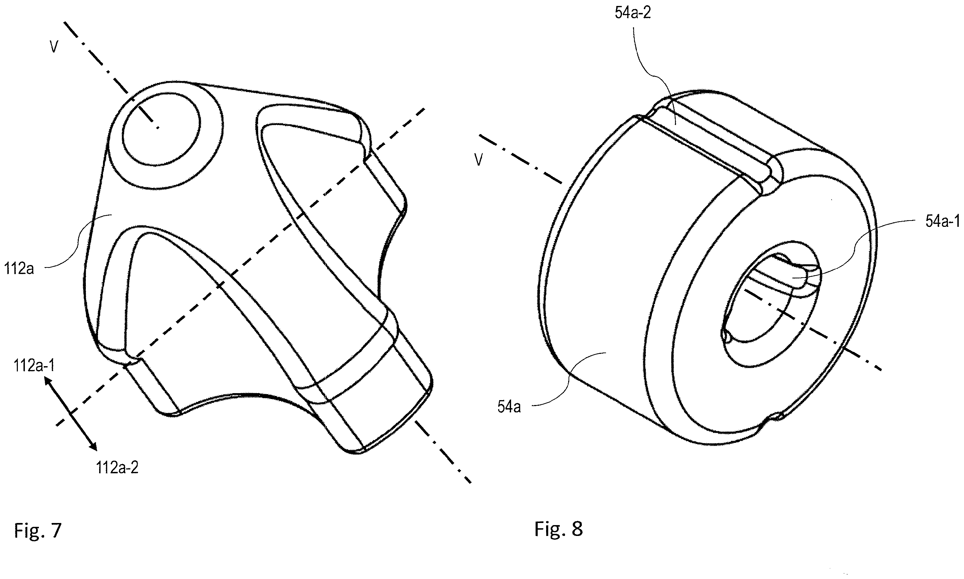

Im Detail erkennt man in Figur 6, dass ein alternatives Dämpfungselement 112a vorgesehen ist, welches sich innerhalb der zentralen Ausnehmung 106 befindet und dessen strukturelle Beschaffenheit weiter unten mit Bezug auf Figur 7 näher beschrieben ist. Dabei ist das Dämpfungselement 112a an der Zwischenkopplungseinheit 90 so angebracht, dass es dem Führungsvorsprung 104 zugewandt ist. Das Dämpfungselement 112a kann anstelle von oder auch zusammen mit dem im zweiten Ausführungsbeispiel beschriebenen Dämpfungselement 112 vorgesehen sein. Des Weiteren erkennt man in der Figur 6, dass ein alternatives Rückstellelement 54a vorgesehen ist, welches eine nicht lineare, progressive Simulationskennlinie bei einer Druckdeformation entlang der Verlagerungsachse V aufweist. Das alternative Rückstellelement 54a ist weiter unten mit Bezug auf Figur 8 beschrieben.

In Figur 7 ist das Dämpfungselement 112a als ein dreiflügeliger pfeilspitzenförmiger Körper mit einer Durchgangsbohrung in Längsrichtung gezeigt, wobei Ausführungsbeispiele mit nur einem, zwei oder mehr als drei Flügeln vorgesehen sein können. Das Dämpfungselement 112a umfasst ferner zwei Deformationsabschnitte 112a-1, 112a-2, die wiederum unterschiedliche Deformationswiderstände aufweisen.

Konkret bildet der Flügelabschnitt den ersten Deformationsabschnitt 112a-1 aus, der einen vergleichsweise geringen Deformationswiderstand aufweist, also als ein harter Federabschnitt ausgebildet ist. Der zweite Deformationsabschnitt 112a-2 ist im Vergleich zum ersten Deformationsabschnitt 112a-1 mit einem geringeren Deformationswiderstand sowie einem geringeren Durchmesser ausgebildet. Er stellt ferner einen im Vergleich zum ersten Deformationsabschnitt 112a-1 weicheren Federabschnitt bereit. Der zweite Deformationsabschnitt 112a-2 ist ferner teilweise in der zentralen Ausnehmung 106 aufgenommen. Man erkennt in Figur 6, dass dabei eine Übermaßpassung vorliegt und die zentrale Ausnehmung 106 in der gezeigten Ausgangsstellung noch einen ausreichenden Freiraum bereitstellt, um den zweiten Deformationsabschnitt 112a-2 in Folge einer Deformation und insbesondere eines radialen nach außen Drängens aufzunehmen.

In Figur 8 ist das alternative Rückstellelement 54a als ein zylindrischer oder ringförmiger Körper aus einem gummielastischem Material, d.h. ein Gummifederelement, gezeigt. Dabei sind am Innen- sowie am Außenumfang in axialer Richtung verlaufende Führungs- oder Sicherungsnuten 54a-1, 54a-2 vorgesehen, die in diesem Ausführungsbeispiel jeweils um 90° versetzt sind. Mit anderen Worten weist der Innenumfang weist zwei entlang einer ersten Querschnittsgeraden gegenüberliegende erste Führungs- bzw. Sicherungsnuten 54a-1 und der Außenumfang zwei entlang einer zweiten Querschnittsgeraden gegenüberliegende zweite Führungs- oder Sicherungsnuten 54a-2 auf, wobei die Querschnittsgeraden orthogonal zueinander sowie zur Verlagerungsachse v oder zur Achse des alternativen Rückstellelements 54a stehen. Die Führungs- oder Sicherungsfunktion ergibt sich aufgrund des in Figur 6 angedeuteten Zusammenwirkens mit einer entsprechenden (nicht gezeigten) Führungsschiene am Anschlagbereich 64 sowie mit einer entsprechenden orthogonal zur Verlagerungsachse v verlaufenden Führungsschiene 66a an der Bodenfläche 66.

Zu beachten ist, dass das Vorsehen des Dämpfungselements 112a rein optional ist und die Ausführungsform gemäß Figur 6 auch ohne dieses Element realisiert werden kann. Allerdings bietet das optionale Ergänzen dieses Merkmals beispielsweise den Vorteil, dass dem Fahrer insbesondere bei mechanischen Übersetzungen größer als 4:1 zum Ende hin ein definierter und vor allem gedämpfter Abschluss des Bremsvorgangs suggeriert wird.

## Patentansprüche

1. Pedalsimulationsvorrichtung (10), umfassend:
- ein Gehäuse (36);
- einen Anschlagbereich (64), der im Wesentlichen starr mit dem Gehäuse (36) gekoppelt ist;
- einen Kolben (44), der in dem Gehäuse (36) aufgenommen unter Durchlaufen aufeinanderfolgender erster und zweiter Betätigungsphasen (b, C) in eine Betätigungsrichtung (B) verlagerbar ist;
- eine Rückstellvorrichtung (46), die dazu ausgebildet ist, eine Rückstellkraft auf den Kolben (44) auszuüben, die entgegen dessen in die Betätigungsrichtung (B) erfolgende Verlagerung wirkt;
wobei die Rückstellvorrichtung (46) folgendes umfasst:
- ein erstes elastisch deformierbares Rückstellelement (54), das eine Federkennline aufweist,
- ein zweites elastisch deformierbares Rückstellelement (56), das eine Federkennlinie aufweist, und
- eine Kopplungseinheit (58),
wobei das erste und das zweite Rückstellelement (54, 56) dazu ausgebildet sind, sich zumindest infolge einer Bremspedalbetätigung über die Kopplungseinheit (58) aneinander abstützen,
wobei die Kopplungseinheit (58) während der ersten Betätigungsphase (b) des Kolbens (44) unter einer Deformation von überwiegend oder im Wesentlichen ausschließlich dem ersten Rückstellelement (54) verlagerbar ist,
wobei die Kopplungseinheit (58) nach dem Durchlaufen der ersten Betätigungsphase (b) dazu ausgebildet ist, sich derart an dem Anschlagbereich (64) abzustützen, dass eine weitere Verlagerung in die Betätigungsrichtung (B) unterbunden ist,
wobei der Kolben (44) bei Durchlaufen der zweiten Betätigungsphase (C) dazu ausgebildet ist, unter einer Deformation von überwiegend oder im Wesentlichen ausschließlich dem zweiten Rückstellelement (56) weiter in die Betätigungsrichtung (B) verlagert zu werden,
wobei das erste elastisch deformierbare Rückstellelement (54) eine im Wesentlichen nichtlineare Federkennlinie aufweist und das zweite elastisch deformierbare Rückstellelement (56) eine im Wesentlichen lineare Federkennlinie aufweist, **dadurch gekennzeichnet, dass** die Rückstellvorrichtung (46) zusätzlich eine Zwischenkopplungseinheit (90) umfasst, über die sich der Kolben (44) an der Kopplungseinheit (58) abstützt, wobei sich das zweite Rückstellelement (56) zumindest bei einer in die Betätigungsrichtung (B) erfolgenden Kolbenverlagerung an der Zwischenkopplungseinheit (90) abstützt, und
wobei die Zwischenkopplungseinheit (90) derart angeordnet ist, dass sie zumindest infolge einer Bremspedalbetätigung in Anlage mit der Kopplungseinheit (58) und/oder mit dem Anschlagbereich (64) bringbar ist.

2. Pedalsimulationsvorrichtung (10) nach Anspruch 1,
wobei das erste Rückstellelement (54) dazu ausgebildet ist, während der zweiten Betätigungsphase (C) einen im Wesentlichen gleichbleibenden Deformationszustand beizubehalten.

3. Pedalsimulationsvorrichtung (10) nach Anspruch 1 oder 2,
wobei das erste und zweite Rückstellelement (54, 56) derart angeordnet sind, dass sie in Serie wirken.

4. Pedalsimulationsvorrichtung (10) nach einem der vorangehenden Ansprüche, wobei sich das erste Rückstellelement (54) mit einem ersten Endbereich an der Kopplungseinheit (58) abstützt mit einem zweiten Endbereich an einem Bodenbereich (48) des Gehäuses (36).

5. Pedalsimulationsvorrichtung (10) nach einem der vorangehenden Ansprüche,
wobei das erste Rückstellelement (54) einen geringeren Deformationswiderstand aufweist als das zweite Rückstellelement (56), und
wobei dieses Verhältnis der Deformationswiderstände vorzugsweise wenigstens während der ersten Betätigungsphase (b) aufrechterhalten wird.

6. Pedalsimulationsvorrichtung (10) nach einem der vorangehenden Ansprüche,
wobei das erste Rückstellelement (54) ein Gummifederelement umfasst, das in einem unbetätigten Zustand des Kolbens (44) vorzugsweise einen im Wesentlichen vorspannungsfreien Zustand einnimmt.

7. Pedalsimulationsvorrichtung (10) nach einem der vorangehenden Ansprüche, wobei das zweite Rückstellelement (56) ein Spiralfederelement umfasst.

8. Pedalsimulationsvorrichtung (10) nach einem der vorangehenden Ansprüche, wobei der Anschlagbereich (64) und die Kopplungseinheit (58) einander axial überlappen, insbesondere wobei eine axiale Überlappungslänge (L) dieser Elemente nach Maßgabe einer Verlagerung des Kolbens (44) in die erste Betätigungsrichtung (B) veränderbar ist.

9. Pedalsimulationsvorrichtung (10) nach einem der vorangehenden Ansprüche, wobei der Anschlagbereich (64) zumindest abschnittsweise in einem Aufnahmebereich (62) der Kopplungseinheit (58) aufgenommen oder aufnehmbar ist, und/oder wobei der Anschlagbereich (64) eine Anschlagfläche (86) umfasst und der Aufnahmebereich (62) eine Kontaktfläche (84) umfasst, wobei die Kontaktfläche (84) nach dem Durchlaufen der ersten Betätigungsphase (b) in Anlage mit der Anschlagfläche (86) bringbar ist.

10. Pedalsimulationsvorrichtung (10) nach einem der vorangehenden Ansprüche, wobei der Anschlagbereich (64) einen Führungsbereich (74) umfasst, an dem sich die Kopplungseinheit (58) abstützt, und wobei der Führungsbereich (74) dazu ausgebildet ist, die Kopplungseinheit (58) bei einer Kolbenverlagerung während der ersten Betätigungsphase zumindest abschnittsweise verlagerbar zu führen.

11. Pedalsimulationsvorrichtung (10) nach einem der vorangehenden Ansprüche, wobei die Zwischenkopplungseinheit (90) ein Zwischenrückstellelement (100) umfasst, das einen geringeren Deformationswiderstand aufweist als das erste und/oder das zweite Rückstellelement (54, 56).

12. Pedalsimulationsvorrichtung (10) nach einem der vorangehenden Ansprüche, wobei die Zwischenkopplungseinheit (90) derart angeordnet ist, dass sich das Zwischenrückstellelement (100) an dem Kolben (44) abstützt und/oder damit in Anlage steht oder in Anlage bringbar ist.

13. Kraftfahrzeugbremsanlage (1),
umfassend eine Pedalsimulationsvorrichtung (10) gemäß einem der vorangehenden Ansprüche.

14. Verfahren zum Bereitstellen einer haptischen Rückmeldung bei einer Bremspedalbetätigung, umfassend die Schritte:
a) Verlagern eines Kolbens (44), der sich über eine Zwischenkopplungseinheit (90) an einer Kopplungseinheit (58) abstützt, in eine Betätigungsrichtung (B) unter überwiegender oder im Wesentlichen ausschließlicher Deformation eines ersten elastisch deformierbaren Rückstellelements (54);
b) Verlagern der Kopplungseinheit (58) in die Betätigungsrichtung (B) nach Maßgabe der Kolbenverlagerung;
c) nach Zurücklegen einer vorbestimmten Verlagerungsstrecke, Herstellen einer abstützenden Wechselwirkung zwischen der Kopplungseinheit (58) und einem Anschlagbereich (64), derart, dass ein weiteres Verlagern der Kopplungseinheit (58) in die Betätigungsrichtung (B) unterbunden ist; und anschließend
d) weiteres Verlagern des Kolbens (44) in die Betätigungsrichtung (B) unter überwiegender oder im Wesentlichen ausschließlicher Deformation eines zweiten elastisch deformierbaren Rückstellelements (56), das sich an der Zwischenkopplungseinheit (90) abstützt,
wobei das erste Rückstellelement (54) eine im Wesentlichen nichtlineare Federkennlinie aufweist und das zweite Rückstellelement (56) eine im Wesentlichen lineare Federkennlinie aufweist, und
wobei die Zwischenkopplungseinheit (90) infolge der Bremspedalbetätigung in Anlage mit der Kopplungseinheit (58) und/oder mit dem Anschlagbereich (64) gebracht wird.

## Claims

1. Pedal simulation device (10) comprising:
- a housing (36);
- a stop region (64) which is coupled substantially rigidly to the housing (36);
- a piston (44) which, accommodated in the housing (36), is displaceable in an actuation direction (B) with successive first and second actuation phases (b, C) being passed through;
- a restoring device (46) which is configured to exert a restoring force on the piston (44), which restoring force acts counter to the displacement of said piston occurring in the actuation direction (B) ;
wherein the restoring device (46) comprises the following:
- a first elastically deformable restoring element (54) having a spring characteristic curve,
- a second elastically deformable restoring element (56) having a spring characteristic curve, and
- a coupling unit (58),
wherein the first and second restoring elements (54, 56) are configured to be supported against one another via the coupling unit (58) at least as a result of an actuation of a brake pedal,
wherein, during the first actuation phase (b) of the piston (44), the coupling unit (58) is displaceable with a deformation of predominantly or substantially exclusively the first restoring element (54),
wherein, after the first actuation phase (b) has been passed through, the coupling unit (58) is configured to be supported against the stop region (64) in such a way that further displacement in the actuation direction (B) is prevented,
wherein, in the case of the second actuation phase (C) being passed through, the piston (44) is configured to be displaced further in the actuation direction (B) with a deformation of predominantly or substantially exclusively the second restoring element (56),
wherein the first elastically deformable restoring element (54) has a substantially nonlinear spring characteristic curve and the second elastically deformable restoring element (56) has a substantially linear spring characteristic curve,
**characterized in that** the restoring element (46) additionally comprises an intermediate coupling unit (90) via which the piston (44) is supported against the coupling unit (58), wherein the second restoring element (56) is supported against the intermediate coupling unit (90) at least in the case of a piston displacement occurring in the actuation direction (B), and
wherein the intermediate coupling unit (90) is arranged in such a way that it is able to be brought into abutment with the coupling unit (58) and/or with the stop region (64) at least as a result of an actuation of a brake pedal.

2. Pedal simulation device (10) according to Claim 1, wherein the first restoring element (54) is configured to maintain a substantially unchanged deformation state during the second actuation phase (C).

3. Pedal simulation device (10) according to Claim 1 or 2,
wherein the first and second restoring elements (54, 56) are arranged in such a way that they act in series.

4. Pedal simulation device (10) according to one of the preceding claims,
wherein the first restoring element (54) is supported by way of a first end region against the coupling unit (58) and by way of a second end region against a bottom region (48) of the housing (36).

5. Pedal simulation device (10) according to one of the preceding claims,
wherein the first restoring element (54) has a lower deformation resistance than the second restoring element (56), and
wherein this relationship between the deformation resistances is preferably maintained at least during the first actuation phase (b).

6. Pedal simulation device (10) according to one of the preceding claims,
wherein the first restoring element (54) comprises a rubber spring element which, in a non-actuated state of the piston (44), preferably assumes a state in which it is substantially free of pre-stress.

7. Pedal simulation device (10) according to one of the preceding claims,
wherein the second restoring element (56) comprises a spiral spring element.

8. Pedal simulation device (10) according to one of the preceding claims,
wherein the stop region (64) and the coupling unit (58) axially overlap one another, in particular wherein an axial overlap length (L) of these elements is variable according to a displacement of the piston (44) in the first actuation direction (B).

9. Pedal simulation device (10) according to one of the preceding claims,
wherein the stop region (64) is received or able to be received at least sectionally in a receiving region (62) of the coupling unit (58), and/or wherein the stop region (64) comprises a stop surface (86) and the receiving region (62) comprises a contact surface (84), wherein, after the first actuation phase (b) has been passed through, the contact surface (84) is able to be brought into abutment with the stop surface (86).

10. Pedal simulation device (10) according to one of the preceding claims,
wherein the stop region (64) comprises a guide region (74) against which the coupling unit (58) is supported, and wherein the guide region (74) is configured to guide the coupling unit (58) in an at least sectionally displaceable manner in the case of a piston displacement during the first actuation phase.

11. Pedal simulation device (10) according to one of the preceding claims,
wherein the intermediate coupling unit (90) comprises an intermediate restoring element (100) which has a lower deformation resistance than the first and/or the second restoring element (54, 56).

12. Pedal simulation device (10) according to one of the preceding claims,
wherein the intermediate coupling unit (90) is arranged in such a way that the intermediate restoring element (100) is supported against the piston (44) and/or is in abutment or is able to be brought into in abutment therewith.

13. Motor-vehicle brake system (1)
comprising a pedal simulation device (10) according to one of the preceding claims.

14. Method for providing haptic feedback when a brake pedal is actuated, comprising the steps of:
a) displacing a piston (44), which is supported against a coupling unit (58) via an intermediate coupling unit (90), in an actuation direction (B) with predominant or substantially exclusive deformation of a first elastically deformable restoring element (54) ;
b) displacing the coupling unit (58) in the actuation direction (B) according to the piston displacement;
c) after a predetermined displacement distance has been covered, establishing a supporting interaction between the coupling unit (58) and a stop region (64) in such a way that further displacement of the coupling unit (58) in the actuation direction (B) is prevented; and subsequently
d) further displacing the piston (44) in the actuation direction (B) with predominant or substantially exclusive deformation of a second elastically deformable restoring element (56) which is supported against the intermediate coupling unit (90),
wherein the first restoring element (54) has a substantially nonlinear spring characteristic curve and the second restoring element (56) has a substantially linear spring characteristic curve, and
wherein the intermediate coupling unit (90) is brought into abutment with the coupling unit (58) and/or with the stop region (64) as a result of the actuation of a brake pedal.

## Revendications

1. Dispositif de simulation de pédale (10), comprenant
- un boîtier (36) ;
- une région de butée (64) qui est accouplée sensiblement rigidement au boîtier (36) ;
- un piston (44) qui est logé dans le boîtier (36) et peut être déplacé dans une direction d'actionnement (B) en passant par des premières et deuxièmes phases d'actionnement (b, C) successives ;
- un dispositif de rappel (46) qui est réalisé pour exercer une force de rappel sur le piston (44), laquelle force agit à l'encontre de son déplacement s'effectuant dans la direction d'actionnement (B) ;
le dispositif de rappel (46) comprenant les éléments suivants :
- un premier élément de rappel (54) déformable élastiquement, qui présente une courbe caractéristique de ressort,
- un deuxième élément de rappel (56) déformable élastiquement, qui présente une courbe caractéristique de ressort, et
- une unité d'accouplement (58),
le premier et le deuxième élément de rappel (54, 56) étant réalisés pour s'appuyer l'un contre l'autre au moins par suite d'un actionnement de la pédale de frein par le biais de l'unité d'accouplement (58),
l'unité d'accouplement (58) pouvant être déplacée pendant la première phase d'actionnement (b) du piston (44) sous l'effet d'une déformation principalement ou sensiblement exclusivement du premier élément de rappel (54), l'unité d'accouplement (58) étant réalisée pour, une fois la première phase d'actionnement (b) achevée, s'appuyer contre la région de butée (64) de telle sorte qu'un déplacement supplémentaire dans la direction d'actionnement (B) soit empêché,
le piston (44) étant réalisé pour, lors du déroulement de la deuxième phase d'actionnement (C), être déplacé davantage dans la direction d'actionnement (B) sous l'effet d'une déformation principalement ou sensiblement exclusivement du deuxième élément de rappel (56),
le premier élément de rappel (54) déformable élastiquement présentant une courbe caractéristique de ressort sensiblement non linéaire et le deuxième élément de rappel (56) déformable élastiquement présentant une courbe caractéristique de ressort sensiblement linéaire, **caractérisé en ce que** le dispositif de rappel (46) comprend en outre une unité d'accouplement intermédiaire (90), par le biais de laquelle le piston (44) s'appuie sur l'unité d'accouplement (58), le deuxième élément de rappel (56) s'appuyant contre la deuxième unité d'accouplement intermédiaire (90) au moins lors d'un déplacement de piston s'effectuant dans la direction d'actionnement (B), et
l'unité d'accouplement intermédiaire (90) étant disposée de telle sorte qu'elle peut être amenée en contact avec l'unité d'accouplement (58) et/ou avec la région de butée (64) au moins par suite d'un actionnement de la pédale de frein.

2. Dispositif de simulation de pédale (10) selon la revendication 1,
dans lequel le premier élément de rappel (54) est réalisé pour maintenir un état de déformation sensiblement constant pendant la deuxième phase d'actionnement (C).

3. Dispositif de simulation de pédale (10) selon la revendication 1 ou 2,
dans lequel le premier et le deuxième élément de rappel (54, 56) sont disposés de telle sorte qu'ils agissent en série.

4. Dispositif de simulation de pédale (10) selon l'une des revendications précédentes,
dans lequel le premier élément de rappel (54) s'appuie par une première région d'extrémité sur l'unité d'accouplement (58) et par une deuxième région d'extrémité sur une région de fond (48) du boîtier (36).

5. Dispositif de simulation de pédale (10) selon l'une des revendications précédentes,
dans lequel le premier élément de rappel (54) présente une résistance à la déformation inférieure à celle du deuxième élément de rappel (56), et
dans lequel ce rapport des résistances à la déformation est maintenu de préférence au moins pendant la première phase d'actionnement (b).

6. Dispositif de simulation de pédale (10) selon l'une des revendications précédentes,
dans lequel le premier élément de rappel (54) comprend un élément ressort en caoutchouc, qui adopte, dans un état non actionné du piston (44), de préférence un état sensiblement sans précontrainte.

7. Dispositif de simulation de pédale (10) selon l'une des revendications précédentes,
dans lequel le deuxième élément de rappel (56) comprend un élément ressort spiral.

8. Dispositif de simulation de pédale (10) selon l'une des revendications précédentes,
dans lequel la région de butée (64) et l'unité d'accouplement (58) se chevauchent axialement l'une l'autre, en particulier dans lequel une longueur de chevauchement axiale (L) de ces éléments peut être modifiée conformément à un déplacement du piston (44) dans la première direction d'actionnement (B).

9. Dispositif de simulation de pédale (10) selon l'une des revendications précédentes,
dans lequel la région de butée (64) est logée ou peut être logée, au moins dans certaines parties, dans une région de logement (62) de l'unité d'accouplement (58) et/ou dans lequel la région de butée (64) comprend une surface de butée (86) et la région de réception (62) comprend une surface de contact (84), dans lequel la surface de contact (84) peut être amenée en contact avec la surface de butée (86) une fois la première phase d'actionnement (b) achevée.

10. Dispositif de simulation de pédale (10) selon l'une des revendications précédentes,
dans lequel la région de butée (64) comprend une région de guidage (74) sur laquelle s'appuie l'unité d'accouplement (58), et dans lequel la région de guidage (74) est réalisée pour guider l'unité d'accouplement (58) de manière déplaçable au moins dans certaines parties lors d'un déplacement du piston pendant la première phase d'actionnement.

11. Dispositif de simulation de pédale (10) selon l'une des revendications précédentes,
dans lequel l'unité d'accouplement intermédiaire (90) comprend un élément de rappel intermédiaire (100) qui présente une résistance à la déformation inférieure à celle du premier et/ou du deuxième élément de rappel (54, 56) .

12. Dispositif de simulation de pédale (10) selon l'une des revendications précédentes,
dans lequel l'unité d'accouplement intermédiaire (90) est disposée de telle sorte que l'élément de rappel intermédiaire (100) s'appuie sur le piston (44) et/ou est en contact ou peut être amené en contact avec celui-ci.

13. Système de freinage de véhicule automobile (1), comprenant un dispositif de simulation de pédale (10) selon l'une des revendications précédentes.

14. Procédé de fourniture d'une rétroaction haptique lors d'un actionnement de pédale de frein, comprenant les étapes suivantes :
a) déplacement d'un piston (44) qui s'appuie sur une unité d'accouplement (58) par le biais d'une unité d'accouplement intermédiaire (90), dans une direction d'actionnement (B) sous l'effet d'une déformation principale ou sensiblement exclusive d'un premier élément de rappel (54) déformable élastiquement ;
b) déplacement de l'unité d'accouplement (58) dans la direction d'actionnement (B) conformément au déplacement du piston ;
c) après qu'une distance de déplacement prédéfinie a été parcourue, réalisation d'une interaction de support entre l'unité d'accouplement (58) et une région de butée (64), de telle sorte qu'un déplacement supplémentaire de l'unité d'accouplement (58) dans la direction d'actionnement (B) soit empêché ; et ensuite
d) déplacement supplémentaire du piston (44) dans la direction d'actionnement (B) sous l'effet d'une déformation principale ou sensiblement exclusive d'un deuxième élément de rappel (56) déformable élastiquement qui s'appuie sur l'unité d'accouplement intermédiaire (90),
le premier élément de rappel (54) présentant une courbe caractéristique de ressort sensiblement non linéaire et le deuxième élément de rappel (56) présentant une courbe caractéristique de ressort sensiblement linéaire, et
l'unité d'accouplement intermédiaire (90) étant amenée en contact avec l'unité d'accouplement (58) et/ou avec la région de butée (64) par suite de l'actionnement de la pédale de frein.
